# EUROPEAN PATENT SPECIFICATION

(11) **EP 3 290 318 B1**
(45) Date of publication and mention of the grant of the patent: **14.04.2021**
(21) Application number: 16786539.3
(22) Date of filing: 27.04.2016
(51) Int. Cl.: B62J 45/411, B62J 45/42, B62K 21/00

(54) **LEANING VEHICLE**
NEIGEFAHRZEUG
VÉHICULE S'INCLINANT

(30) Priority: 28.04.2015 JP 2015091799
(43) Date of publication of application: 07.03.2018
(73) Proprietor: Yamaha Hatsudoki Kabushiki Kaisha, Iwata-shi, Shizuoka 438-8501 (JP)
(72) Inventor: TOYOTA, Takeshi, Iwata-shi Shizuoka 438-8501 (JP); HARA, Nobuo, Iwata-shi Shizuoka 438-8501 (JP); FUKUHARA, Yukihide, Iwata-shi Shizuoka 438-8501 (JP); NAGATA, Tatsuya, Iwata-shi Shizuoka 438-8501 (JP)
(74) Representative: Grünecker Patent- und Rechtsanwälte PartG mbB
(86) International application number: PCT/JP2016/063284
(87) International publication number: WO 2016/175263

(56) References cited:
- EP-A2- 1 248 013
- CN-U- 203 111 409
- JP-A- 2008 068 734
- JP-A- 2011 046 273
- JP-A- 2011 073 619
- JP-A- 2011 213 155
- JP-A- 2012 017 042
- JP-A- 2012 076 490
- JP-A- 2012 076 502
- JP-A- 2012 076 511
- JP-A- 2012 181 057
- JP-A- 2014 091 506
- JP-A- 2014 521 105
- JP-B2- 5 383 388

## Description

The present invention relates to a leaning vehicle having a body frame which includes a headpipe which is provided at a center of the vehicle in a left-and-right direction thereof and which leans to the right of the vehicle in the left-and-right direction thereof when the vehicle turns right and turns to the left of the vehicle in the left-and-right direction thereof when the vehicle turns left. The prior art document JP 5383388 B2 discloses a leaning vehicle with a body frame which includes a headpipe provided at a center of the vehicle in a left-and-right direction thereof and which leans to a right in the left-and-right direction of the vehicle when the vehicle turns right and leans to a left in the left-and-right direction of the vehicle when the vehicle turns left. A front wheel is suspended on the body frame and turnable in the left-and-right direction. A steering torque transmission mechanism is configured to mechanically transmit steering torque inputted into a handlebar assembly to the front wheel. The steering torque transmission mechanism includes the handlebar assembly which is connected directly or indirectly to a steering shaft and which has the steering shaft which is supported on the headpipe via a plurality of bearings so as to turn within a rotational angle range of smaller than 180 degrees but so as not to turn within a rotational angle range of equal to or greater than 180 degrees and whose turning axis is provided at the center of the vehicle in the left-and-right direction thereof so as to extend along an up-and-down direction of the vehicle. A right grip portion is provided on the right of the center of the vehicle in the left-and-right direction thereof for a rider to grip thereon and a left grip portion is provided on the left of the center of the vehicle in the left-and-right direction thereof for the rider to grip thereon. A front wheel connecting portion is connecting the steering shaft and the front wheel together. A steering torque detection device is provided for detecting at least part of steering torque which is inputted into the steering torque transmission mechanism. The steering torque transmission mechanism includes a torsional deformation facilitating portion which is provided on a portion of the steering shaft which is supported by the plurality of bearings in a steering torque transmission path which extends from the right grip portion or the left grip portion to the front wheel and which is easily twisted to be deformed by steering torque inputted from the right grip portion or the left grip portion. The steering torque detection device detects at least part of steering torque which is inputted into the steering torque transmission mechanism based on a torsional deformation of the torsional deformation facilitating portion.
The prior art JP 2012 181057 A discloses the following features of claim 1: a leaning vehicle comprising:a body frame which includes a headpipe provided at a center of the vehicle in a left-and-right direction thereof and which leans to a right in the left-and-right direction of the vehicle when the vehicle turns right and leans to a left in the left-and-right direction of the vehicle when the vehicle turns left;a front wheel suspended on the body frame and turnable in the left-and-right direction;a steering torque transmission mechanism which is configured to mechanically transmit steering torque inputted into a handlebar assembly to the front wheel and which includes:the handlebar assembly which is connected directly or indirectly to a steering shaft and which has:the steering shaft which is supported on the headpipe via a plurality of bearings so as to turn within a rotational angle range of smaller than 180 degrees but so as not to turn within a rotational angle range of equal to or greater than 180 degrees and whose turning axis (A) is provided at the center of the vehicle in the left-and-right direction thereof so as to extend along an up-and-down direction of the vehicle;a right grip portion which is provided on the right of the center of the vehicle in the left-and-right direction thereof for a rider to grip thereon and a left grip portion which is provided on the left of the center of the vehicle in the left-and-right direction thereof for the rider to grip thereon; and a front wheel connecting portion connecting the steering shaft and the front wheel together; a steering torque detection device for detecting at least part of steering torque which is inputted into the steering torque transmission mechanism, wherein the steering torque transmission mechanism includes a deformation facilitating portion which is provided upstream of a portion of the steering shaft which is supported by an upstream bearing which is situated most upstream in the plurality of bearings in a steering torque transmission path which extends from the right grip portion or the left grip portion to the front wheel and which is easily deformed by steering torque inputted from the right grip portion or the left grip portion, and wherein the steering torque detection device detects at least part of steering torque which is inputted into the steering torque transmission mechanism based on a deformation of the deformation facilitating portion.

Patent Literature 1 (Prior art document JP 5383388 B2) discloses a leaning vehicle having a body frame which includes a headpipe which is provided at a center of the vehicle in a left-and-right direction thereof and which leans to the right of the vehicle in the left-and-right direction when the vehicle turns right and turns to the left of the vehicle in the left-and-right direction when the vehicle turns left. The leaning vehicle described in Patent Literature 1 has an electric power steering system (EPS) and a steering torque sensor for detecting steering torque. This leaning vehicle has a steering torque transmission path which is made up of members such as, for example, a handlebar which includes a right grip portion and a left grip portion, a steering shaft to which the handlebar is fixed, and suspensions where a front wheel is supported which are arranged in that order from an upstream side to a downstream side of a path for transmitting steering torque.

When a rider inputs a steering force into the grip portions, a steering torque is transmitted to the front wheel via the steering torque transmission path. The steering torque is transmitted to the front wheel while the members making up the steering torque transmission path are being twisted. In the leaning vehicle described in Patent Literature 1, a steering torque sensor for detecting a twist which is generated according to the steering torque is provided somewhere along the steering torque transmission path. By adopting this configuration, the leaning vehicle described in Patent Literature 1 detects steering torque to control the EPS according to the steering torque.

### [Prior Art Literature]

### [Patent Literature]

[Patent Literature 1]Japanese Patent No. 5383388 B2

The inventor has found out that the leaning vehicle described in Patent Literature 1 tends to be shortage in rigidity for supporting the steering shaft. In a case where a member which supports the steering shaft is enlarged simply in size, although the supporting rigidity is enhanced, the size of the vehicle is enlarged.

It is the object of the invention to provide a leaning vehicle having a steering torque sensor which has high supporting rigidity against bending and which is restrained from being enlarged in size. According to the present invention said object is solved by a leaning vehicle having the features of independent claim 1. Preferred embodiments are laid down in the dependent claims.
(1) With a view to solving the problem, according to the invention, there is provided a leaning vehicle including:
   a body frame which includes a headpipe provided at a center of the vehicle in a left-and-right direction thereof and which leans to a right in the left-and-right direction of the vehicle when the vehicle turns right and leans to a left in the left-and-right direction of the vehicle when the vehicle turns left;
   a front wheel suspended on the body frame and turnable in the left-and-right direction;
   a steering torque transmission mechanism which is configured to mechanically transmit steering torque inputted into a handlebar assembly to the front wheel and which includes:
      the handlebar assembly which is connected directly or indirectly to a steering shaft and which has:
         the steering shaft which is supported on the headpipe via a plurality of bearings so as to turn within a rotational angle range of smaller than 180 degrees but so as not to turn within a rotational angle range of equal to or greater than 180 degrees and whose turning axis is provided at the center of the vehicle in the left-and-right direction thereof so as to extend along an up-and-down direction of the vehicle;
         a right grip portion which is provided on the right of the center of the vehicle in the left-and-right direction thereof for a rider to grip thereon and
         a left grip potion which is provided on the left of the center of the vehicle in the left-and-right direction thereof for the rider to grip thereon; and
      a front wheel connecting portion connecting the steering shaft and the front wheel together;
   a steering torque detection device for detecting at least part of steering torque which is inputted into the steering torque transmission mechanism, wherein
   the steering torque transmission mechanism includes a torsional deformation facilitating portion which is provided upstream of a portion of the steering shaft which is supported by an upstream bearing which is situated most upstream in the plurality of bearings in a steering torque transmission path which extends from the right grip portion or the left grip portion to the front wheel and which is easily twisted to be deformed by steering torque inputted from the right grip portion or the left grip portion, and wherein
   the steering torque detection device detects at least part of steering torque which is inputted into the steering torque transmission mechanism based on a torsional deformation of the torsional deformation facilitating portion, the torsional deformation means a deformation involving a displacement in a circumferential direction of an axis which is generated when torque acting about the axis is inputted.

The inventor has found out that a leaning vehicle configured as described in Patent Literature 1 tends to be shortage in rigidity for supporting the steering shaft. In a case where a member which supports the steering shaft is enlarged simply in size, although the supporting rigidity is enhanced, the size of the vehicle is enlarged. This problem will be described in detail below.

The leaning vehicle described in Patent Literature I has a steering shaft which transmits a steering torque which is inputted from the right grip portion and the left grip portion to the front wheel. The handlebar which includes the right grip portion and the left grip portion is provided at an upper portion of the vehicle. The front wheel is provided at a lower portion of the vehicle. Due to this, the steering shaft extends in an up-and-down direction of the body frame.

When the rider inputs steering force into the right grip portion and the left grip portion, the steering shaft is twisted according to steering torque generated then. The steering sensor detects an amount of twisting generated in the steering shaft. A torsional deformation facilitating portion is provided in the steering shaft, and this torsional deformation facilitating portion has lower rigidity than that of the other portions thereof so as to be twisted easier. The steering torque sensor detects the amount of twisting generated in the torsional deformation facilitating portion.

Being different from the vehicle of Patent Literature 1, in a case where the torque sensor is configured to monitor a portion of the steering shaft which has higher rigidity so as to be deformed with difficulty, the steering torque sensor has difficulty in detecting steering torque with good accuracy. In the event that there is a portion which has lower rigidity in the steering torque transmission path, the portion having the lower rigidity is twisted greatly, while the portion having the higher rigidity which is monitored by the steering torque sensor has difficulty in being deformed, making it difficult for the steering torque sensor to detect steering torque with good accuracy. From these reasons, with the leaning vehicle of Patent Literature 1, steering torque can be detected with good accuracy.

Incidentally, the steering shaft of the leaning vehicle of Patent Literature 1 is supported on a headpipe with a plurality of bearings so as to turn therein. Being different from the leaning vehicle of Patent Literature 1, in the event that the steering shaft is attempted to be supported by a single bearing, a great force attempting to prize the bearing is applied to the bearing, and therefore, a large bearing is needed which withstands the great prizing force.

By adopting the configuration described above, with the leaning vehicle of Patent Literature 1, the steering torque is detected with good accuracy while ensuring the required rigidity. However, the inventor has found out that a vehicle which is configured as described in Patent Literature 1 tends to be shortage in rigidity for supporting the steering shaft as will be described below when taking into consideration a bending force which is applied to the steering shaft.

In addition to the twist caused by the steering torque, a bending force is applied to the steering shaft. For example, when a front wheel is displaced in a front-and-rear direction, a bending force is applied to the steering shaft. When the front wheel is displaced in the front-and-rear direction, since a force acting in the front-and-rear direction is applied to a lower portion of the steering shaft, the lower portion of the steering shaft is displaced more than a portion of the steering shaft which lies above the lower portion. When the bending force is applied to the steering shaft on which the torsional deformation facilitating portion is provided, although a portion lying below the torsional deformation facilitating portion is deformed greatly, a portion lying above the torsional deformation facilitating portion has difficulty in being deformed.

A description will be made by taking as an example a case where the steering shaft is supported so as to turn by an upper bearing and a lower bearing which is provided below the upper bearing. Imagine a case where a bending force is applied to a lower portion of the steering shaft which is configured in the way described above. In a case where the torsional deformation facilitating portion configured to detect steering torque is provided below a lower bearing, the bending force is concentrated on to the torsional deformation facilitating portion, whereby the torsional deformation facilitating portion is deformed greatly. Then, it is considered to increase a diameter of the torsional deformation facilitating portion so as to ensure rigidity with a view to ensuring the rigidity against the bending force at the torsional deformation facilitating portion. However, when the diameter of the torsional deformation facilitating portion is so increased, with a view to detecting steering torque with good accuracy, the rigidity of the other portion of the steering shaft needs to be increased higher than that of the torsional deformation facilitating portion. Due to this, in the event that the torsional deformation facilitating portion is provided below the lower bearing, the size of the steering shaft is increased.

As a different configuration, a configuration is considered in which the torsional deformation facilitating portion is provided between the upper bearing and the lower bearing. In this configuration, too, however, stress is concentrated on to the torsional deformation facilitating portion when a bending force is applied to the steering shaft. As a result, in the steering shaft, the portion lying below the torsional deformation facilitating portion is deformed greater than the portion lying above the torsional deformation facilitating portion. Then, the bending force supported by the upper bearing which is situated above the torsional deformation facilitating portion is reduced, while the bending force supported by the lower bearing which is situated below the torsional deformation facilitating portion is increased by such an extent that the bending force supported by the upper bearing is reduced. Due to this, in order to increase the supporting rigidity of the lower bearing, the size of the lower bearing is increased, or in order to increase the rigidity of the torsional deformation facilitating portion, the size of the other portion of the steering shaft is increased. This increases the size of the steering shaft as a whole.

In the description made above, although the steering shaft is described as being supported by the upper bearing and the lower bearing, the same will results even when one or more bearings are provided between the upper bearing and the lower bearing.
In the description made above, although the torsional deformation facilitating portion is described as being provided on the steering shaft, this problem remains the same even when the torsional deformation facilitating portion is provided on the other member than the steering shaft which makes up the steering torque transmission path. It is considered that the torsional deformation facilitating portion is provided on a member lying on a downstream side of the steering torque transmission path, for example, a member which connects the steering shaft and the suspensions together. Even with this configuration taken, however, when attempting to ensure great rigidity on the torsional deformation facilitating portion which is provided on that member, in order to detect an amount of displacement thereof, the rigidity of the other member such as the steering shaft needs to be ensured, this increasing the size of the other member.

The inventor has noticed that the size of the vehicle is increased when attempting to ensure great supporting rigidity and to ensure great accuracy for the steering torque sensor in the configuration where the torsional deformation facilitating portion is provided halfway along the steering torque transmission path in the way described above.

Then, the steering torque transmission mechanism of the leaning vehicle according to the invention includes the torsional deformation facilitating portion which is easily deformed by means of steering torque inputted from the right grip portion or the left grip portion. This torsional deformation facilitating portion is provided upstream of the portion of the steering shaft which is supported by the upstream bearing which is situated most upstream in the plurality of bearings in the steering torque transmission path which extends from the right grip portion or the left grip portion to the front wheel and at the center of the vehicle in the left-and-right direction or laterally symmetrical with respect to the center of the vehicle. By adopting this configuration, even though a bending force is applied to the part which makes up the steering torque transmission path from the front wheel side, the bending force can be supported efficiently by all the bearings, whereby the enlargement in size of the leaning vehicle is restrained.

According to the leaning vehicle of the invention, even though a bending force is applied to the part which makes up the steering torque transmission path, since the bending force applied is supported by all the bearings, it is difficult for the bending force to be applied to the torsional deformation facilitating portion which is provided on the upstream side of the portion of the steering shaft which is supported by the upstream bearing. This obviates the necessity of enhancing the rigidity of the torsional deformation facilitating portion, and the rigidity of the other portion of the steering shaft does not have to be increased more than required. This suppresses the enlargement in size of the leaning vehicle.
(2) In the leaning vehicle configured in the way described above, the torsional deformation facilitating portion may be provided on the handlebar assembly.
(3) In the leaning vehicle configured in the way described above,the handlebar assembly may include a handlebar portion and a handlebar connecting portion which connects the handlebar portion to the steering shaft or the front wheel connecting portion, and the torsional deformation facilitating portion may be provided on the handlebar portion.
(4) In the leaning vehicle configured in the way described above,the handlebar assembly may include a handlebar portion and a handlebar connecting portion which connects the handlebar portion to the steering shaft or the front wheel connecting portion, and the torsional deformation facilitating portion may be provided on the handlebar connecting portion.
(5) In the leaning vehicle configured in the way described above, the torsional deformation facilitating portion may be provided on the steering shaft.
(6) In the leaning vehicle configured in the way described above, the steering torque detection device may be provided on the handlebar assembly.
(7) In the leaning vehicle configured in the way described above,the handlebar assembly may include a handlebar portion and a handlebar connecting portion which connects the handlebar portion to the steering shaft or the front wheel connecting portion, and the steering torque detection device may be provided on the handlebar portion.
(8) In the leaning vehicle configured in the way described above,the handlebar assembly may include a handlebar portion and a handlebar connecting portion which connects the handlebar portion to the steering shaft or the front wheel connecting portion, and the steering torque detection device may be provided on the handlebar connecting portion.
(9) In the leaning vehicle configured in the way described above, the steering torque detection device may be provided on the body frame.
(10) In the leaning vehicle configured in the way described above, a motor which can input assisting steering torque to the steering torque transmission mechanism be provided.
(11) In the leaning vehicle configured in the way described above, the motor may be configured to input assisting steering torque to a portion lying downstream of a portion of the steering shaft which is supported by an upstream bearing which is situated most upstream in the plurality of bearings in the steering torque transmission path which extends from the handlebar assembly to the front wheel.

### BRIEF DESCRIPTION OF THE DRAWINGS

Fig. 1 is a side view of a leaning vehicle according to an embodiment of the invention.
Fig. 2 is a front view showing part of the leaning vehicle shown in Fig. 1.
Fig. 3 is a top view of a top bridge.
Fig. 4 is a sectional view taken along a line IV-IV in Fig. 2.
Fig. 5 shows views of a lower member of a handlebar holder.
Fig. 6 is a sectional view taken along a line VI-VI in Fig. 2.
Fig. 7 is a schematic view of a leaning vehicle according to a second embodiment of the invention as seen from a front thereof.
Fig. 8 is an enlarged view showing a right handlebar portion and a right connecting portion.
Fig. 9 is a schematic view of a leaning vehicle according to a third embodiment of the invention as seen from a front thereof.

### DETAILED DESCRIPTION OF THE PREFERRED EMBODIMENTS

Referring to the accompanying drawings, exemplary modes for carrying out the invention will be described in detail below.

In the accompanying drawings, an arrow F denotes ahead of a vehicle which stands upright and which is not steered. An arrow B denotes behind of the vehicle. An arrow U denotes above of the vehicle. An arrow D denotes below of the vehicle. An arrow R denotes on the right of the vehicle. An arrow L denotes on the left of the vehicle. An up-and-down direction of the vehicle coincides with a perpendicular direction.

In this description, a "front-and-rear direction," a "left-and-right direction" and the "up-and-down direction" mean a front-and-rear direction, a left-and-right direction and an up-and-down direction, respectively, which are based on a body frame as viewed from a rider who drives the vehicle,

In this description, an expression reading something like "extending in the front-and-rear direction" includes extending while being inclined relative to the front-and-rear direction and means extending while being inclined in the front-and-rear direction rather than in the left-and-right direction and in the up-and-down direction.

In this description, an expression reading something like "extending in the left-and-right direction" includes extending while being inclined relative to the left-and-right direction and means extending while being inclined in the left-and-right direction rather than in the front-and-rear direction and in the up-and-down direction.

In this description, an expression reading something like "extending in the up-and-down" includes extending while being inclined relative to the up-and-down direction and means extending while being inclined in the up-and-down rather than in the front-and-rear direction and in the left-and-right direction.

In this description, an expression reading something like "directly on the left of a member A in the left-and-right direction" denotes a space through which the member A passes when the member A is translated to the left in the left-and-right direction. An expression reading something like "directly on the right of the member A in the left-and-right direction" is also defined in the same way.

In this description, an expression reading something like "on the left of the member A in the left-and-right direction" includes the space through which the member A passes when the member A is translated to the left in the left-and-right direction and also a space which expands from the space in a direction which is at right angles to the left-and-right direction. An expression reading something like "on the right of the member A in the left-and-right direction" is defined in the same way.

In this description, an expression reading something like "directly above the member A in the up-and-down direction" denotes a space through which the member A passes when the member A is translated upwards in the up-and-down direction. An expression reading something like "directly below the member A in the up-and-down direction" is defined in the same way.

In this description, an expression reading something like "above the member A in the up-and-down direction" includes the space through which the member A passes when the member A is translated upwards in the up-and-down direction and also a space which expands from the space in a direction which is at right angles to the up-and-down direction. An expression reading something like "below the member A in the up-and-down direction" is defined in the same way.

In this description, an expression reading something like "directly ahead of the member A in the front-and-rear direction" denotes a space through which the member A passes when the member A is translated forwards in the front-and-rear direction. An expression reading something like "directly behind the member A in the front-and-rear direction" is defined in the same way.

In this description, an expression reading something like "ahead of the member A in the front-and-rear direction" includes the space through which the member A passes when the member A is translated forwards in the front-and-rear direction and also a space which expands from the space in a direction which is at right angles to the front-and-rear direction. An expression reading something like "behind the member A in the front-and-rear direction" is defined in the same way.

### <First Embodiment>

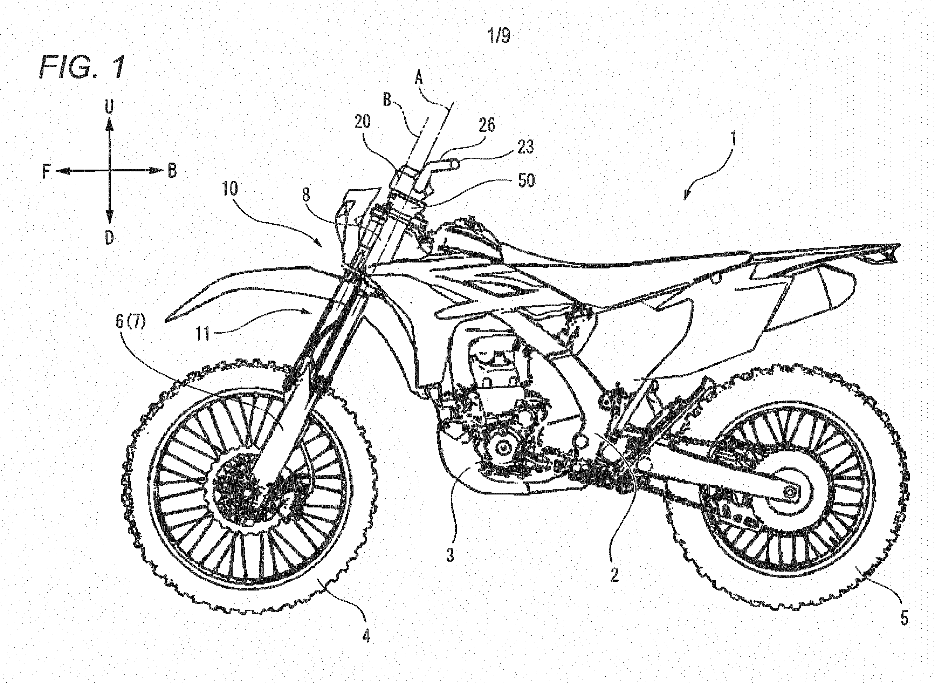

Fig. 1 is a side view of a leaning vehicle (hereinafter, referred simply to as a vehicle) 1 according to a first embodiment of the invention. In this embodiment, the vehicle 1 is a motorcycle. As shown in Fig. 1, the vehicle 1 includes a body frame 2, an engine 3, a front wheel 4 and a rear wheel 5. The rear wheel 5 is driven by the engine 3. The vehicle 1 is a leaning vehicle having the body frame 2 which leans to the right of the vehicle 1 in a left-and-right direction thereof when the vehicle I turns right and leans to the left of the vehicle I in the left-and-right direction thereof when the vehicle 1 turns left.

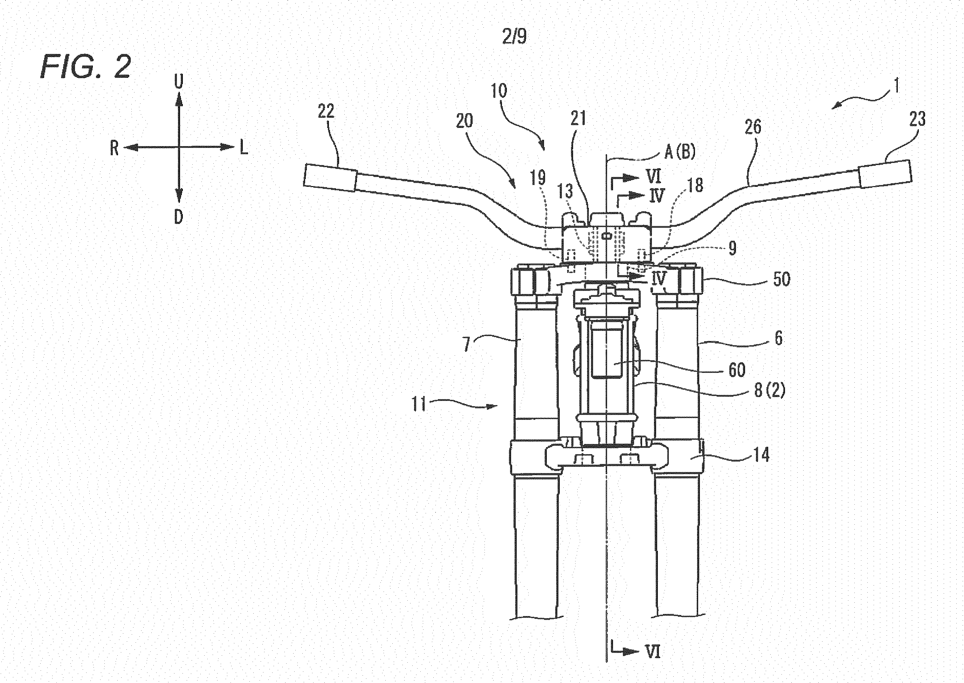

Fig. 2 is a front view showing part of the vehicle 1 shown in Fig. 1. As shown in Fig. 2, the body frame 2 includes a headpipe 8 which supports a steering shaft 9 so as to turn therein. The headpipe 8 is positioned substantially at a center of the vehicle 1 in the left-and-right direction. The headpipe 8 extends in a direction which follows an up-and-down direction of the vehicle 1. The headpipe 8 leans to the right of the vehicle 1 in the left-and-right direction thereof when the vehicle I turns right and leans to the left of the vehicle 1 in the left-and-right direction thereof when the vehicle 1 turns left.

The front wheel 4 is suspended on the body frame 2. The front wheel 4 can be steered in the left-and-right direction of the vehicle 1.

The vehicle 1 has a steering torque transmission mechanism 10. The steering torque transmission mechanism 10 has a steering shaft 9, a handlebar assembly 20, and a front wheel connecting portion 11 which connects the steering shaft 9 and the front wheel 4 together. The steering torque transmission mechanism 10 transmits mechanically steering torque which is inputted into the handlebar assembly 20 to the front wheel 4.

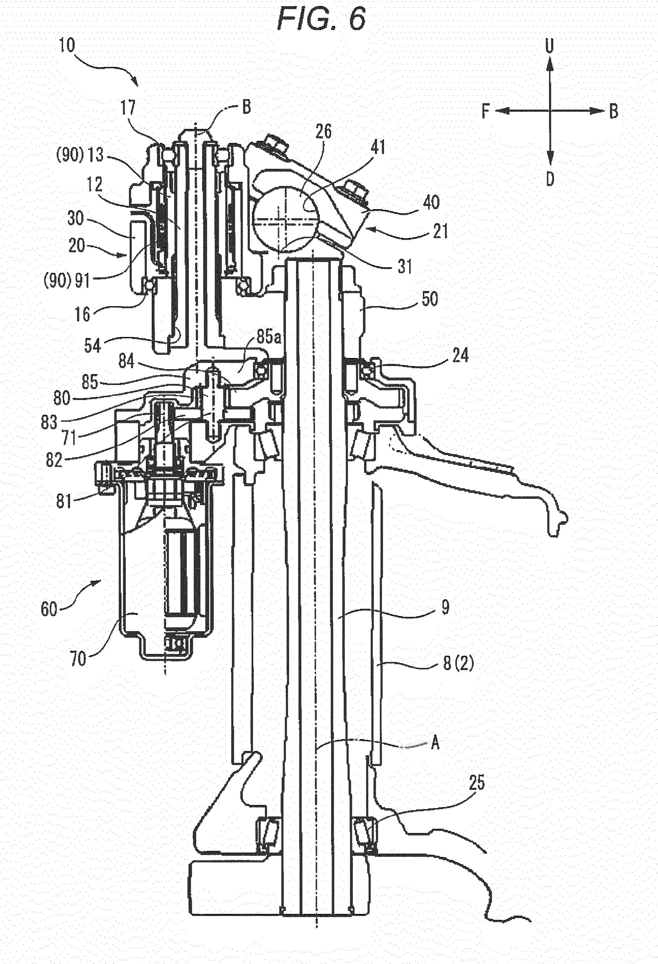

The steering shaft 9 is supported on the headpipe 8 via a plurality of bearings 24, 25 (refer to Fig. 6). The steering shaft 9 can turn about a steering axis A which extends along the up-and-down direction of the vehicle I within a rotational angle range of smaller than 180 degrees but cannot turn within a rotational angle range of equal to or greater than 180 degrees. The steering shaft 9 is provided, with the vehicle 1 standing upright, at a center of the vehicle 1 in the left-and-right direction thereof with the steering axis A extending along the up-and-down direction of the vehicle 1.

The front wheel connecting portion 11 has a top bridge 50, a bottom bridge 14, a right suspension device 7 and a left suspension device 6.

With the vehicle 1 standing upright, the right suspension device 7 is provided on the right of the headpipe 8. With the vehicle 1 standing upright, the left suspension device 6 is provided on the left of the headpipe 8. The right suspension device 7 and the left suspension device 6 extend along the up-and-down direction of the vehicle 1. A lower portion of the right suspension device 7 and a lower portion of the left suspension device 6 support the front wheel 4 so as to rotate about an axle axis which extends in the left-and-right direction of the vehicle 1. The right suspension device 7 and the left suspension device 6 support the front wheel 4 so as to be displaced in the up-and-down direction relative to the body frame 2.

The top bridge 50 is fixed to an upper portion of the steering shaft 9. The top bridge 50 is positioned above the headpipe 8 in the up-and-down direction of the vehicle 1. The top bridge 50 extends in the left-and-right direction of the vehicle 1. A right portion of the top bridge 50 fixes an upper portion of the right suspension device 7. A left portion of the top bridge 50 fixes an upper portion of the left suspension device 6. A middle portion of the top bridge 50 in the left-and-right direction is fixed to the steering shaft 9.

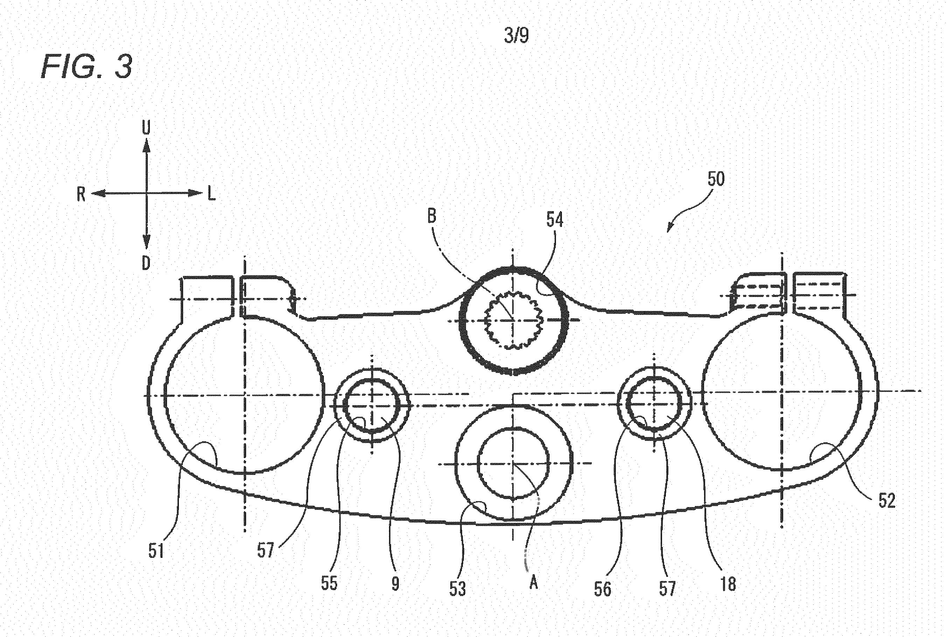

Fig. 3 is a top view of the top bridge 50. As shown in Fig. 3, a left supporting hole 51 is provided in the left portion of the top bridge 50 so that an upper portion of the left suspension device 6 is fitted in the left supporting hole 51. A right supporting hole 52 is provided in the right portion of the top bridge 50 so that an upper portion of the right suspension device 7 is fitted in the right supporting hole 52.

A rear supporting hole 53 is provided in a position which lies at a central portion of the top bridge 50 in the left-and-right direction thereof and at a rear portion of the top bridge 50 so that the upper portion of the steering shaft 9 is fitted in the rear supporting hole 53. A front supporting hole 54 is provided in a position which lies at the central portion of the top bridge 50 in the left-and-right direction thereof and directly ahead of the rear supporting hole 53. Spline grooves are formed on an inner circumferential surface of the front supporting hole 54.

Returning to Fig. 2, the bottom bridge 14 is fixed to a lower portion of the steering shaft 9. The bottom bridge 14 is positioned below the top bridge 50 in the up-and-down direction of the vehicle 1. The bottom bridge 14 is positioned below the headpipe 8 in the up-and-down direction of the vehicle 1. The bottom bridge 14 extends in the left-and-right direction of the vehicle 1. A right portion of the bottom bridge 14 fixes a middle portion of the right suspension device 7 in the up-and-down direction thereof. A left portion of the bottom bridge 14 fixes a middle portion of the left suspension device 6 in the up-and-down direction thereof. A middle portion of the top bridge 50 in the left-and-right direction is fixed to the steering shaft 9.

The handlebar assembly 20 is a group of parts which is connected directly or indirectly to the steering shaft 9. The handlebar assembly 20 includes a right grip portion 22 and a left grip portion 23. The right grip portion 22 is a portion which is gripped by a rider and is provided on the right of the center of the vehicle 1 in the left-and-right direction with the vehicle 1 standing upright and kept unturned. The left grip portion 23 is a portion which is gripped by the rider and is provided on the left of the center of the vehicle 1 in the left-and-right direction with the vehicle 1 standing upright and kept unturned. When dividing the vehicle 1 in the left-and-right direction of the vehicle 1 into three portions such as a right portion, a central portion and a left portion when looking at the vehicle 1 standing upright and kept unturned from the front thereof, the right grip portion 22 is positioned at the right portion, while the left grip portion 23 is positioned at the left portion.

In this embodiment, the handlebar assembly 20 includes further a handlebar portion 26 and a handlebar connecting portion 21. The handlebar portion 26 extends in a direction which follows the left-and-right direction of the vehicle 1. The right grip portion 22 is provided at a right end portion of the handlebar portion 26. The left grip portion 23 is provided at a left end portion of the handlebar portion 26.

The handlebar connecting portion 21 connects the handlebar portion 26 to the steering shaft 9. The handlebar portion 26 is fixed to the handlebar connecting portion 21. The handlebar connecting portion 21 connects the handlebar portion 26, the upper portion of the steering shaft 9 and the top bridge 50 together.

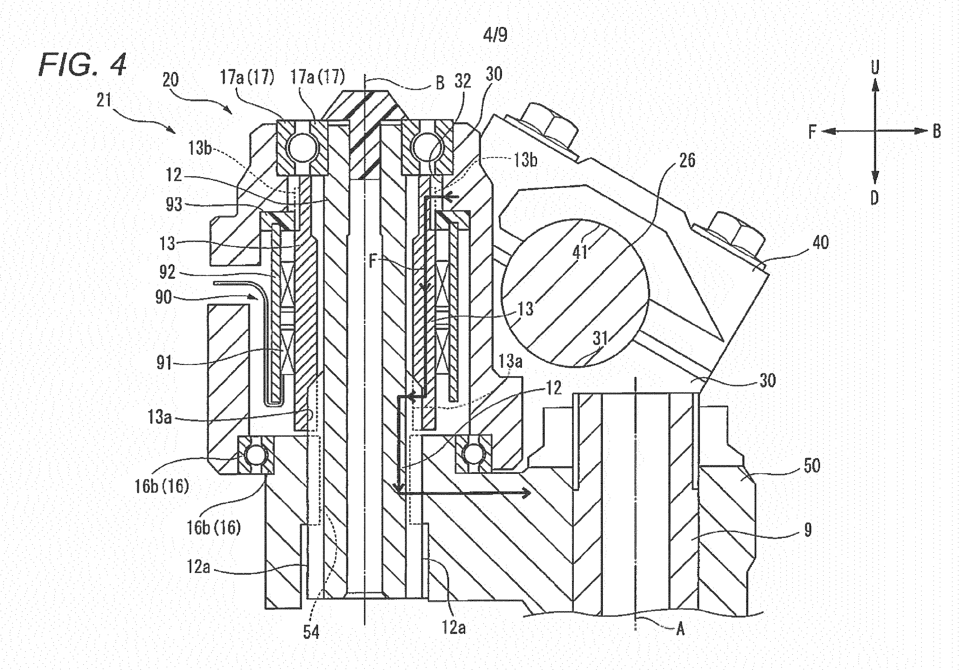

Fig. 4 is a sectional view taken along a line IV-IV in Fig. 2. As shown in Fig. 4, the handlebar connecting portion 21 has an upper member 40 and a lower member 30 which is provided below the upper member 40. The handlebar portion 26 is held to be fixed by the upper member 40 and the lower member 30 therebetween. The handlebar connecting portion 21 is provided above the top bridge 50.

A lower-side handlebar receiving portion 31, which can accommodate the handlebar portion 26 therein, is provided at a rear portion of the lower member 30. The upper member 40 is attached so as to face the lower-side handlebar receiving portion 31. An upper-side handlebar receiving portion 41 is provided on the upper member 40 in a position which corresponds to the lower-side handlebar receiving portion 31.

The handlebar portion 26 is fixed to the handlebar connecting portion 21 by holding the handlebar portion 26 by the lower-side handlebar receiving portion 31 and the upper-side handlebar receiving portion 41. It should be noted that a boundary plane between the lower member 30 and the upper member 40 becomes higher in height at a front portion than at a rear portion at the portion where the handlebar portion 26 is held in the way described above and is formed into an inclined plane which is inclined relative to a horizontal plane.

A front portion of the lower member 30 is a cylindrical shape, and is provided with a through hole 32 penetrating it in the up-and-down direction. A first bearing 16 and a second bearing 17 are provided in an interior of the through hole 32.
The lower member 30 is supported on the top bridge 50 via the first bearing 16 so as to turn thereon. An inner race 16a of the first bearing 16 is fixed to an upper portion of the top bridge 50, and an outer race 16b of the first bearing 16 is fixed to a lower portion of the lower member 30.
An upper portion of the lower member 30 is supported on an upper portion of a shaft member 12 via the second bearing 17 so as to turn thereon. An inner race 17a of the second bearing 17 is fixed to the shaft member 12, and an outer race 17b of the second bearing 17 is fixed to the upper portion of the lower member 30.

In this embodiment, the handlebar connecting portion 21 has further the shaft member 12 and an outer cylindrical member 13.
The shaft member 12 and the outer cylindrical member 13 are cylindrical members whose axes extend in the up-and-down direction. The shaft member 12 and the outer cylindrical member 13 are provided in the interior of the through hole 32. An upper end of the shaft member 12 is positioned above an upper end of the outer cylindrical member 13. A lower end of the shaft member 12 is positioned below a lower end of the outer cylindrical member 13. The outer cylindrical member 13 is provided so as to cover part of an outer circumference of the shaft member 12.

An upper portion of the shaft member 12 is supported on the lower member 30 so as to turn. A middle portion of the shaft member 12 in the up-and-down direction meshes with the outer cylindrical member 13. A lower portion of the shaft member 12 is fixed to the top bridge 50. The shaft member 12 is fixed to the top bridge 50 ahead of the steering shaft 9.

A plurality of spline grooves 12a, which extend in an axial direction, are formed on an outer circumferential surface of a lower portion of the shaft member 12. The upper portion of the shaft member 12 projects upwards from an upper surface of the top bridge 50. The lower portion of the shaft member 12 is spline fitted in the front supporting hole 54 of the top bridge 50. The shaft member 12 is fixed so as not to turn relative to the top bridge 50.

The outer cylindrical member 13 is a cylindrical member. An inner diameter of the outer cylindrical member 13 is almost equal to an outer diameter of the shaft member 12, and the outer cylindrical member 13 is placed over an outer circumferential surface of the shaft member 12. An upper portion of the outer cylindrical member 13 is fixed to the lower member 30. A middle portion of the outer cylindrical member 13 in the up-and-down direction meshes with the shaft member 12. The outer cylindrical member 13 is not fixed to the top bridge 50. The outer cylindrical member 13 is a metallic cylindrical member whose thickness is thinner than that of the shaft member 12. The outer cylindrical member 13 is easier to be deformed torsionally by means of steering torque inputted by the rider than the shaft member 12. This outer cylindrical member 13 is provided at a center of the vehicle 1 in the left-and-right direction with the vehicle 1 standing upright and kept unturned (refer to Fig. 2). When dividing the vehicle 1 in the left-and-right direction of the vehicle 1 into three portions such as a right portion, a central portion and a left portion when looking at the vehicle 1 standing upright and kept unturned from the front thereof, the outer cylindrical member 13 is positioned at the central portion.

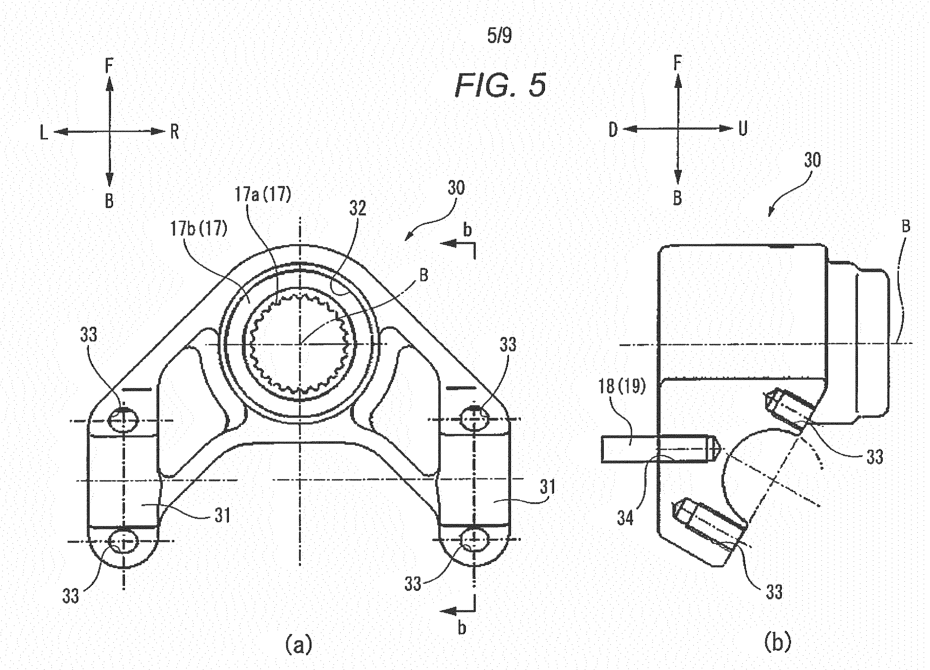

Fig. 5 shows views of the lower member 30 of the handlebar connecting portion 21. Fig. 5(a) is a top view of the lower member 30, and Fig. 5(b) is a sectional view of the lower member 30 taken along a line b-b in Fig. 5(a). As shown in Fig. 5(a), the through hole 32 is provided in the front portion of the lower member 30 so that the shaft member 12 is inserted therethrough. The second bearing 17 is provided in the through hole 32. As has been described above, the shaft member 12 is fixed to the inner race 17a of the second bearing 17 so as not to turn. The lower-side handlebar receiving portion 31 is provided on the left and right of the through hole 32.

A pair of first threaded holes 33 is provided in an upper surface of the lower member 30. The pair of first threaded holes 33 is provided so as to hold the lower-side handlebar receiving portion 31 therebetween in the front-and-rear direction. The upper member 40 is aligned with the lower member 30 so that the upper-side handlebar receiving portion 41 faces the lower-side handlebar receiving portion 31, and then, the upper member 40 is fixed to the lower member 30 by screwing screws into the first threaded holes 33.

Returning to Fig. 4, the outer cylindrical member 13 is disposed outwards of the shaft member 12 and inwards of the lower member 30. A spline groove 13a is provided on an inner circumferential surface of the lower portion of the outer cylindrical member 13. The lower portion of the outer cylindrical member 13 is not fixed to the lower member 30 but is spline fitted on the outer circumferential surface of the shaft member 12. A spline groove 13b is provided on an outer circumferential surface of the upper portion of the outer cylindrical member 13. The upper portion of the outer cylindrical member 13 is not fixed to the shaft member 12 but is fixed to the lower member 30.

When steering torque is applied to the lower member 30 from the handlebar portion 26 to turn the lower member 30 relative to the shaft member 12, the outer cylindrical member 13 is twisted, whereby the steering torque is transmitted to the shaft member 12. Namely, the steering torque inputted into the handlebar portion 26 is transmitted to the top bridge 50 via the outer cylindrical member 13. When the steering torque is inputted thereinto, the upper portion of the outer cylindrical member 13 is deformed relative to the lower portion thereof in a turning direction about a twisting axis B which extends in an axial direction of the outer cylindrical member 13. When the steering torque is inputted thereinto, the upper portion of the outer cylindrical member 13 is twisted relative to the lower portion thereof about the twisting axis B which extends in the axial direction of the outer cylindrical member 13. The twisting axis B extends in the up-and-down direction of the vehicle 1. In this embodiment, the twisting axis B is parallel to the direction of a major axis of the shaft member 12. The twisting axis B is parallel to a steering axis A.

It should be noted that in this embodiment, the steering torque is transmitted from the handlebar portion 26 to the top bridge 50 via a right assisting transmission member 18 and a left assisting transmission member 19 in addition to the outer cylindrical member 13. As shown in Fig. 5(b), a pair of left and right second threaded holes 34 is provided on a lower surface of the lower member 30. The pair of left and right second threaded holes 34 is provided in positions which correspond to a left middle hole 55 and a right middle hole 56, respectively, which are provided in the top bridge 50. The left assisting transmission member 19 is screwed into the left second threaded hole 34 of the lower member 30. The right assisting transmission member 18 is screwed into the right second threaded hole 34 of the lower member 30.

Returning to Fig. 3, the left middle hole 55 is provided in the top bridge 50 in a position lying between the left supporting hole 51 and the rear supporting hole 53 in relation to the left-and-right direction and ahead of the rear supporting hole 53 in relation to the front-and-rear direction. A rubber ring 57 is fitted in an inner circumferential surface of the left middle hole 55. The right middle hole 56 is provided in the top bridge 50 in a position lying between the right supporting hole 52 and the rear supporting hole 53 in relation to the left-and-right direction and ahead of the rear supporting hole 53 in relation to the front-and-rear direction. A rubber ring 57 is fitted in an inner circumferential surface of the right middle hole 56.

The left assisting transmission member 19, which is fixed to the lower member 30, penetrates through the left middle hole 55 of the top bridge 50. The right assisting transmission member 18, which is fixed to the lower member 30, penetrates through the right middle hole 56 of the top bridge 50.

As shown in Fig. 3, the rubber ring 57 is provided between the left assisting transmission member 19 and the inner circumferential surface of the left middle hole 55. The rubber ring 57 is provided between the right assisting transmission member 18 and the inner circumferential surface of the right middle hole 56. When the rider applies steering torque to the handlebar portion 26, the rubber ring 57 is elastically deformed after the outer cylindrical member 13 is twisted, and the left assisting transmission member 19 applies the steering torque to an inner wall of the left middle hole 55 via the rubber ring 57. Additionally, the rubber ring 57 is elastically deformed after the outer cylindrical member 13 is twisted, and the right assisting transmission member 18 applies the steering torque to an inner wall of the right middle hole 56 via the rubber ring 57.
Namely, the left assisting transmission member 19 and the right assisting transmission member 18 assist in transmitting the steering torque inputted into the handlebar portion 26 to the top bridge 50. In this way, since steering torque is not applied only to the outer cylindrical member 13, great rigidity is not required on the outer cylindrical member 13, which suppresses the enlargement in size of the outer cylindrical member 13.

As shown in Fig. 4, the vehicle 1 according to this embodiment has a torque sensor 90 (an example of a steering torque detection device) for detecting at least part of steering torque which is inputted into the steering torque transmission mechanism 10. In this embodiment, the torque sensor 90 is a magnetostrictive torque sensor. The torque sensor 90 includes a pickup coil 91. The pickup coil 91 is provided outside the outer cylindrical member 13. The pickup coil 91 is fixed to a mounting substrate 92. This mounting substrate 92 is fixed to the lower member 30 of the handlebar connecting portion 21 via a bush 93.

When the rider inputs a steering force into the right grip portion 22 and the left grip portion 23, steering torque is transmitted to the handlebar portion 26. In Fig. 4, a line F denotes a steering torque transmission path. As indicated by the line F, when steering torque is inputted into the handlebar portion 26, this steering torque acts on the handlebar connecting portion 21. The force inputted into the lower member 30 is transmitted to the outer cylindrical member 13 via the spline groove 13b provided on the upper portion of the outer cylindrical member 13. The force is further transmitted to the shaft member 12 via the spline groove 13a which is provided on the lower portion of the outer cylindrical member 13. The shaft member 12 transmits the steering torque to the top bridge 50 via the spine grooves 12a and the front supporting hole 54 on which the spline grooves are provided.

The outer cylindrical member 13 is fixed to the lower member 30 at the upper portion and is fixed to the shaft member 12 at the lower portion thereof. Due to this, when the steering torque is inputted into the handlebar portion 26, the upper portion of the outer cylindrical member 13 is deformed relative to the lower portion of the outer cylindrical member 13 in the turning direction about the twisting axis B. The upper portion of the outer cylindrical member 13 is twisted about the twisting axis B relative to the lower portion of the outer cylindrical member 13. Then, the pickup coil 91 detects a variation in physical amount according to the amount of twisting of the upper portion of the outer cylindrical member 13. In this embodiment, the pickup coil 91 detects a variation in an electric signal which is caused by the variation in physical amount which is the amount of twisting of the outer cylindrical member 13. An electric circuit connected electrically to this pickup coil 91 converts this physical amount into a value indicating steering torque.

The twisting axis B of the outer cylindrical member 13 of the torque sensor 90 is offset ahead of the steering axis A of the steering shaft 9. Due to this, for example, even when the rider attempts to translate the handlebar portion 26 to the left without rotating the handlebar portion 26, the force is applied to the shaft member 12 from the outer cylindrical member 13, whereby the top bridge 50 turns about the steering axis A. Namely, since the outer cylindrical member 13 is twisted even when the handlebar portion 26 is operated to be translated in the left-and-right direction, the torque sensor 90 can detect the operation.

As described above, the twisting axis B of the outer cylindrical member 13 is offset relative to the steering axis A of the steering shaft 9, and the upper end of the steering shaft 9 is positioned below the lower end of the shaft member 12 in relation to the up-down-direction of the steering shaft 9. Because of this, compared with a case where the steering shaft 9 and the shaft member 12 are aligned on the same straight line, the vehicle 1 is made compact in the up-and-down direction thereof.

### (Assisting Force Application Mechanism 60)

Fig. 6 is a sectional view taken along a line VI-VI in Fig. 2. As shown in Fig. 6, the vehicle 1 according to this embodiment has an assisting force application mechanism 60 in front of the headpipe 8. The torque sensor 90, the top bridge 50 and the assisting force application mechanism 60 are arranged in this order from top to bottom in the up-and-down direction of the headpipe 8.
In the up-and-down direction of the headpipe 8, a lower end of the pickup coil of the torque sensor 90 is positioned above an upper end of the top bridge 50, and an upper end of the assisting force application mechanism 60 (an upper end of a housing 85 in the illustrated example) is positioned below a lower end of a central portion of the top bridge 50. The assisting force application mechanism 60 includes a motor 70 and a speed reducer 80. The motor torque generated by the motor 70 is applied to the steering shaft 9 via the speed reducer 80.

The motor 70 has an output shaft 71. The motor 70 is attached to the headpipe 8 so that the output shaft 71 becomes parallel to the steering axis A. The output shaft 71 is also parallel to the twisting axis B. When looking at the vehicle from the side thereof, the output shaft 71 of the motor 70 is provided ahead of the steering axis A of the steering shaft 9 in the front-and-rear diction which is at right angles to the steering axis A of the steering shaft 9.

The speed reducer 80 has a first gearwheel 82 and a second gearwheel 83 which are fixed to the same middle shaft 81. An axis of the middle shaft 81 of the speed reducer 80, an axis of the output shaft 71 of the motor 70, and the steering axis A are parallel to one another. The first gearwheel 82 of the speed reducer 80 meshes with the output shaft 71 of the motor 70. The second gearwheel 83 of the speed reducer 80 meshes with a third gearwheel 84 which is fixed to an outer circumferential surface of the steering shaft 9.

The motor 70 and the speed reducer 80 are provided in an interior of a common housing 85. The housing 85 includes an attaching portion 85a at a rear portion thereof. The attaching portion 85a of the housing 85 is held by the top bridge 50 and the headpipe 8 therebetween.

When the motor 70 is driven to rotate the output shaft 71, the motor torque is transmitted from the output shaft 71 to the first gearwheel 82 of the speed reducer 80. When the first gearwheel 82 is rotated, the second gearwheel 83 rotates together with the first gearwheel 82. The rotation of the second gearwheel 83 is transmitted to the third gearwheel 84 of the steering shaft 9. The motor torque of the motor 70 is transmitted to the steering shaft 9 in the way described above.

As shown in Fig. 6, the steering shaft 9 is supported by the upper bearing 24 and the lower bearing 25 which is provided below the upper bearing 24 so as to turn. The headpipe 8 supports the steering shaft 9 so as to turn via the upper bearing 24 and the lower bearing 25. An outer race of the upper bearing 24 is fixed to the housing 85 which is fixed to the body frame 2. An inner race of the upper bearing 24 is fixed to the third gearwheel 84 which is fixed to the steering shaft 9. An outer race of the lower bearing 25 is fixed to the headpipe 8. An inner race of the lower bearing 25 is fixed to the steering shaft 9.

In this embodiment, a steering torque transmission path is made up of, from an upstream side to a downstream side, the right grip portion 22 and the left grip portion 23, the handlebar portion 26, the lower member 30, the outer cylindrical member 13, the shaft member 12, the top bridge 50, the steering shaft 9, the bottom bridge 14, the right suspension device 7 and the left suspension device 6, and the front wheel 4 in that order.

Incidentally, the steering torque transmission mechanism 10 includes the outer cylindrical member 13 (an example of a torsional deformation facilitating portion) which is easy to be deformed by means of steering torque inputted from the right grip portion 22 or the left grip portion 23.
In the steering torque transmission path extending from the right grip portion 22 or the left grip portion 23 to the front wheel 4, the outer cylindrical member 13 is provided upstream of a portion of the steering shaft 9 which is supported by the upper bearing 24 (an example of an upstream bearing) of the plurality of bearings 24, 25 which is situated most upstream.

When a steering force is inputted into the right grip portion 22 or the left grip portion 23 from the rider, the outer cylindrical member 13 is easier to be twisted than the shaft member 12. When a steering force is inputted into the right grip portion 22 or the left grip portion 23 from the rider, the outer cylindrical member 13 is easier to be twisted than the lower member 30 and the handlebar portion 26. When a steering force is inputted into the right grip portion 22 or the left grip portion 23 from the rider, the outer cylindrical member 13 is easier to be twisted than the top bridge 50, the steering shaft 9, the bottom bridge 14, the right suspension device 7 and the left suspension device 6.

When a steering force is inputted into the right grip portion 22 or the left grip portion 23 from the rider, the outer cylindrical member 13 is twisted to be deformed more greatly than the other members which make up the steering torque transmission path. Since the amount of torsional deformation is great, the torque sensor 90 easily detects part of the steering torque inputted from the right grip portion 22 or the left grip portion 23 with good accuracy.

Incidentally, the inventor has found out that a leaning vehicle configured as described in Patent Literature 1 tends to be shortage in rigidity for supporting the steering shaft . In a case where a member which supports the steering shaft is enlarged simply in size, although the supporting rigidity is enhanced, the size of the vehicle is enlarged. This problem will be described in detail below.

The leaning vehicle described in Patent Literature I has the steering shaft which transmits steering torque which is inputted from the right grip portion and the left grip portion to the front wheel. The handlebar which includes the right grip portion and the left grip portion is provided at an upper portion of the vehicle. The front wheel is provided at a lower portion of the vehicle. Due to this, the steering shaft extends in an up-and-down direction of the body frame.

When the rider inputs a steering force into the right grip portion and the left grip portion, the steering shaft is twisted according to steering torque generated then. The steering sensor detects an amount of twisting generated in the steering shaft. A torsional deformation facilitating portion is provided in the steering shaft, and this torsional deformation facilitating portion has lower rigidity than that of the other portions thereof so as to be twisted easier. The steering torque sensor detects an amount of deformation of the torsional deformation facilitating portion.

Being different from the leaning vehicle of Patent Literature 1, in a case where the torque sensor is configured to monitor a portion of the steering shaft which has higher rigidity so as to be deformed with difficulty, the steering torque sensor has difficulty in detecting steering torque with good accuracy. In the event that there is a portion which has lower rigidity in the steering torque transmission path, the portion having the lower rigidity is twisted greatly, while the portion having the higher rigidity which is monitored by the steering torque sensor has difficulty in being deformed, making it difficult for the steering torque sensor to detect steering torque with good accuracy. From these reasons, with the leaning vehicle of Patent Literature 1, steering torque can be detected with good accuracy.

Incidentally, the steering shaft of the leaning vehicle of Patent Literature 1 is supported on the headpipe with the plurality of bearings so as to turn therein. Being different from the leaning vehicle of Patent Literature 1, in the event that the steering shaft is attempted to be supported by a single bearing, a great force attempting to prize the bearing is applied to the bearing, and therefore, a large bearing is needed which withstands the great prizing force.

By adopting the configuration described above, with the leaning vehicle of Patent Literature 1, the steering torque is detected with good accuracy while ensuring the required rigidity. However, the inventor has found out that a vehicle which is configured as described in Patent Literature 1 tends to be shortage in rigidity for supporting the steering shaft as will be described below when taking into consideration a bending force which is applied to the steering shaft.

In addition to a twist caused by steering torque, a bending force is applied to the steering shaft. For example, when a front wheel is displaced in a front-and-rear direction, a bending force is applied to the steering shaft. When the front wheel is displaced in the front-and-rear direction, since a force acting in the front-and-rear direction is applied to a lower portion of the steering shaft, the lower portion of the steering shaft is displaced more than a portion of the steering shaft which lies above the lower portion. When a bending force is applied to the steering shaft on which a torsional deformation facilitating portion is provided, although the steering shaft is bent greatly at the torsional deformation facilitating portion, a portion lying above the torsional deformation facilitating portion is not deformed greatly.

A description will be made by taking as an example a case where the steering shaft is supported so as to turn by an upper bearing and a lower bearing which is provided below the upper bearing. Imagine a case where a bending force is applied to a lower portion of the steering shaft which is configured in the way described above. In a case where the torsional deformation facilitating portion configured to detect steering torque is provided below a lower bearing, the bending force is concentrated on to the torsional deformation facilitating portion, whereby the torsional deformation facilitating portion is deformed greatly. Then, it is considered to increase a diameter of the torsional deformation facilitating portion so as to ensure rigidity with a view to ensuring the rigidity against the bending force at the torsional deformation facilitating portion. However, when the diameter of the torsional deformation facilitating portion is so increased, with a view to detecting steering torque with good accuracy, the rigidity of the other portion of the steering shaft needs to be increased higher than that of the torsional deformation facilitating portion. Due to this, in the event that the torsional deformation facilitating portion is provided below the lower bearing, the size of the steering shaft is increased.

As a different configuration, a configuration is considered in which the torsional deformation facilitating portion is provided between the upper bearing and the lower bearing. In this configuration, too, however, stress is concentrated on to the torsional deformation facilitating portion when a bending force is applied to the steering shaft. As a result, in the steering shaft, the portion lying below the torsional deformation facilitating portion is deformed greater than the portion lying above the torsional deformation facilitating portion. Then, the bending force supported by the upper bearing which is situated above the torsional deformation facilitating portion is reduced, while the bending force supported by the lower bearing which is situated below the torsional deformation facilitating portion is increased by such an extent that the bending force supported by the upper bearing is reduced. Due to this, in order to increase the supporting rigidity of the lower bearing, the size of the lower bearing is increased, or in order to increase the rigidity of the torsional deformation facilitating portion, the size of the other portion of the steering shaft is increased. This increases the size of the steering shaft as a whole.

In the description made above, although the steering shaft is described as being supported by the upper bearing and the lower bearing, the same will results even when one or more bearings are provided between the upper bearing and the lower bearing. In the description made above, although the torsional deformation facilitating portion is described as being provided on the steering shaft, this problem remains the same even when the torsional deformation facilitating portion is provided on the other member than the steering shaft which makes up the steering torque transmission path. It is considered that the torsional deformation facilitating portion is provided on a member lying on a downstream side of the steering torque transmission path, for example, a member which connects the steering shaft and the suspensions together. Even with this configuration taken, however, when attempting to ensure great rigidity on the torsional deformation facilitating portion which is provided on that member, in order to detect an amount of twisting thereof, the rigidity of the other member such as the steering shaft needs to be ensured, this increasing the size of the other member.

The inventor has noticed that the size of the vehicle is increased when attempting to ensure great supporting rigidity and to ensure great accuracy for the steering torque sensor in the configuration where the torsional deformation facilitating portion is provided halfway along the steering torque transmission path in the way described above.

Then, the steering torque transmission mechanism 10 of the vehicle 1 according to this embodiment includes the outer cylindrical member 13 (an example of the torsional deformation facilitating portion) which is easy to be deformed by means of steering torque inputted from the right grip portion 22 or the left grip portion 23. In the steering torque transmission path extending from the right grip portion 22 or the left grip portion 23 to the front wheel 4, the outer cylindrical member 13 is provided upstream of the portion of the steering shaft 9 which is supported by the upper bearing 24 (the example of the upstream bearing) of the plurality of bearings 24, 25 which is situated most upstream. By adopting this configuration, even though a bending force is applied to the part which makes up the steering torque transmission path from the side of the front wheel 4, the bending force can be supported efficiently by all the bearings 24, 25, whereby the enlargement in size of the vehicle 1 is restrained.

In addition, even though the bending force is applied to the steering torque transmission path, since the bending force is supported by all the bearings 24, 25, it is difficult for the bending force to be applied to the outer cylindrical member 13 which is provided upstream of the portion of the steering shaft 9 which is supported by the upper bearing 24 in the steering torque transmission path. This obviates the necessity of enhancing the rigidity of the outer cylindrical member 13, and the rigidity of the other portions does not have to be increased more than required. This suppresses the enlargement in size of the vehicle 1.

In the vehicle 1 according to this embodiment, the outer cylindrical member 13 which functions as the torsional deformation facilitating portion which is easily twisted to be deformed when the steering torque is applied thereto is provided on the handlebar assembly 20. Since the torsional deformation facilitating portion can be configured by using at least one of the group of parts which makes up the handlebar assembly 20, the degree of freedom in designing the torsional deformation facilitating portion is enhanced.

In the vehicle 1 according to the embodiment, the handlebar assembly 20 includes the handlebar portion 26 and the handlebar connecting portion 21 which connects the handlebar portion 26 to the steering shaft 9. The outer cylindrical member 13 as the torsional deformation facilitating portion is provided on the handlebar connecting portion 21.

In the vehicle 1 according to the embodiment, the torque sensor 90 is provided on the handlebar assembly 20. Since the torque sensor can be mounted by using at least one of the group of parts which makes up the handlebar assembly 20, the degree of freedom in disposing the torque sensor is enhanced.

In the vehicle 1 according to the embodiment, the handlebar assembly 20 includes the handlebar portion 26 and the handlebar connecting portion 21 which connects the handlebar portion 26 to the steering shaft 9. The torque sensor 90 is provided on the handlebar connecting portion 21.

In the vehicle 1 according to the embodiment, the motor 70 is provided which can input assisting steering torque into the steering torque transmission mechanism 10. The motor 70 can assist the rider in steering or turning the front wheel 4.

In the vehicle 1 according to the embodiment, the motor 70 is configured to input assisting steering torque to a portion lying downstream of the portion of the steering shaft 9 which is supported by the upper bearing 24 of the plurality of bearings 24, 25 which is positioned most upstream in the steering torque transmission path extending from the handlebar assembly 20 to the front wheel 4. Since torque generated by the motor 70 is applied to the portion lying downstream of the outer cylindrical member 13, the torque sensor is detected easily and with good accuracy by the torque sensor 90 which detects torque based on the torsional deformation of the outer cylindrical member 13.

According to the vehicle 1 of this embodiment, for example, an electric current is supplied to the motor 70 according to an output of the torque sensor 90 to generate the motor torque so as to assist the rider in steering or turning the front wheel 4. In this embodiment, the output of the torque sensor 90 is described as being used to assist the steering torque. However, the invention is not limited thereto. For example, the output of the torque sensor 90 may be used for traction control, or the output of the torque sensor 90 may be used to control the ABS (Anti-lock Brake System).

As shown in Fig. 2, at least part of the torque sensor 90 is positioned on the right of the left suspension device 6 and on the left of the right suspension device 7 in relation to the left-and-right direction when looking at the vehicle standing upright and kept unturned from the front thereof. In this embodiment, the whole of the torque sensor 90 is positioned on the right of the left suspension device 6 and on the left of the right suspension device 7 when looking at the vehicle standing upright and kept unturned from the front thereof.

According to the vehicle 1 of the embodiment which is configured in the way described above, since the top bridge 50 connects the steering shaft 9 and the left and right suspension devices 6, 7 together, there exists no such situation that the steering torque inputted into the handlebar portion 26 is concentrated on to the steering shaft 9. This obviates the necessity of increasing the diameter of the steering shaft 9, thereby making it possible to suppress the enlargement in size of the vehicle.

The torque sensor 90 detects the steering torque inputted into the handlebar portion 26 based on the amount of twisting of the outer cylindrical member 13 (an example of a variation in physical amount) which is generated by the relative displacement between the lower member 30 and the shaft member 12. Namely, the torque sensor 90 detects a variation in physical amount of the outer cylindrical member 13 which is positioned on the upstream side of the top bridge 50 in the steering torque transmission path from the handlebar portion 26 to the front wheel 4.

A portion of the steering torque transmission path from the top bridge 50 to the front wheel 4 which lies downstream of the top bridge 50 is divided into paths to the steering shaft 9, the left suspension device 6 and the right suspension device 7. Because of this, even though a variation in physical amount of the members lying downstream of the top bridge 50 is detected, the steering torque inputted into the handlebar portion 26 cannot be detected accurately. According to the vehicle 1 of the embodiment, however, the torque sensor 90 detects a variation in physical amount of the outer cylindrical member 13 which is positioned upstream of the top bridge 50 in the steering torque transmission path. This enables the torque sensor 90 to detect the steering torque inputted into the handlebar portion 26 accurately.

Further, according to the vehicle I of the embodiment, at least part of the torque sensor 90 is positioned on the right of the left suspension device 6 and on the left of the right suspension device 7 in relation to the left-and-right direction when looking at the vehicle standing upright and kept unturned from the front thereof. This enables the torque sensor 90 to be disposed near the steering shaft 9. When the handlebar portion 26 is turned, the handlebar connecting portion 21 on which the torque sensor 90 is provided also moves together with the handlebar portion 26. Because of this, being different from the embodiment, in the event that the torque sensor 90 is disposed in a position lying far away from the steering shaft 9, the other members have to be disposed in positions lying far away from the steering shaft 9 so that the torque sensor 90 is prevented from interfering with the other members, which increases the size of the vehicle. According to this embodiment, however, since the torque sensor 90 can be disposed near the steering shaft 9, it becomes difficult for the torque sensor 90 to interfere with the other members, thereby making it possible to suppress the enlargement in size of the vehicle 1.

When the handlebar portion 26 is turned, the torque sensor 90 also moves together with the handlebar portion 26. On the other hand, the headpipe 8 does not move together with the handlebar portion 26 even when the handlebar portion 26 is turned. Because of this, there are fears that the torque sensor 90 comes into interference with the headpipe 8 when the handlebar portion 26 is turned. Thus, an attempt to avoid the interference of the torque sensor 90 with the headpipe 8 may impose a limitation on the degree of freedom in designing the vehicle.

According to the vehicle 1 of the embodiment, however, at least part of the torque sensor 90 is positioned above the lower end of the top bridge 50 which is positioned above the headpipe 8 when looking at the vehicle standing upright and kept unturned from the front thereof. This makes it difficult for the torque sensor 90 to come into interference with the top bridge 50 even when the handlebar portion 26 is turned because the torque sensor 90 and the top bridge 50 are positioned apart from each other in relation to the up-and-down direction, thereby enhancing the degree of freedom in designing the vehicle.

### <Second Embodiment>

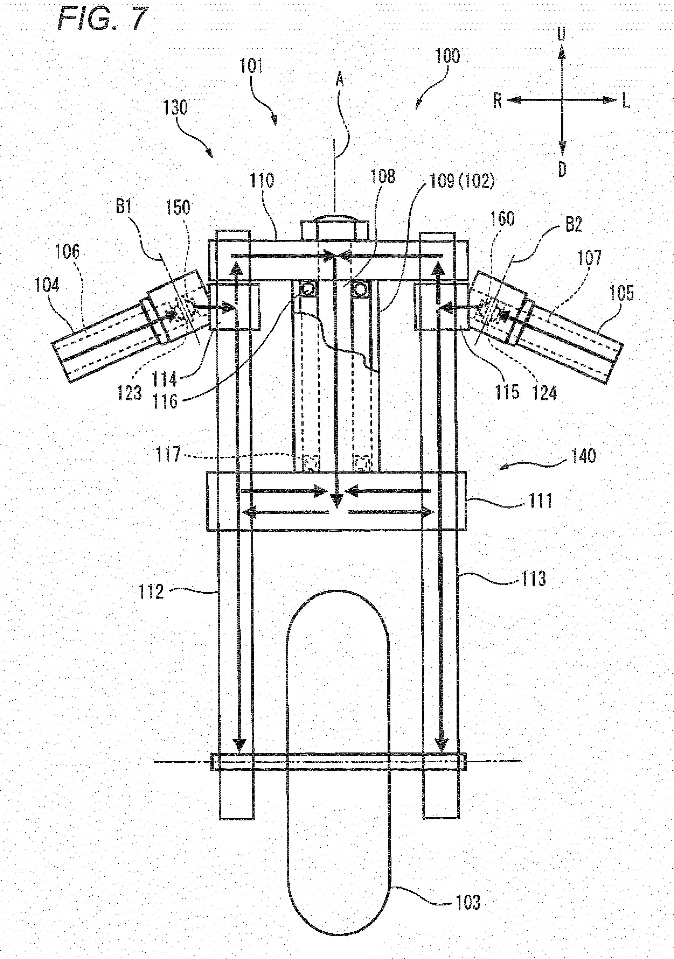

Fig. 7 is a schematic view of a vehicle 100 according to a second embodiment of the invention as seen from a front thereof. In the vehicle 100 shown in Fig. 7, a torsional deformation facilitating portion is provided on a handlebar portion.

The vehicle 100 includes a steering torque transmission mechanism 101, a body frame 102 including a headpipe 109, and a front wheel 103. The steering torque transmission mechanism 101 transmits the steering torque which is inputted from a rider to the front wheel 103. The steering torque transmission mechanism 101 has a steering shaft 108, a handlebar assembly 130 and a front wheel connecting portion 140. The steering torque transmission mechanism 101 transmits mechanically the steering torque inputted into the handlebar assembly 130 to the front wheel 103.

The handlebar assembly 130 is a group of parts which is connected directly or indirectly to the steering shaft 108. The handlebar assembly 130 includes a right grip portion 104, a right handlebar portion 106 and a right connecting portion 114. The handlebar assembly 130 includes a left grip portion 105, a left handlebar portion 107 and a left connecting portion 115.

The front wheel connecting portion 140 connects the steering shaft 108 and the front wheel 103 together. The front wheel connecting portion 140 includes a top bridge 110, a bottom bridge 111, a right suspension device 112 and a left suspension device 113.

The right grip portion 104 is provided at a right portion of the right handlebar portion 106. A left portion of the right handlebar portion 106 is connected to an upper portion of the right suspension device 112. The right connecting portion 114 is provided at the left portion of the right handlebar portion 106. The right handlebar portion 106 is connected to the right suspension device 112 via the right connecting portion 114.

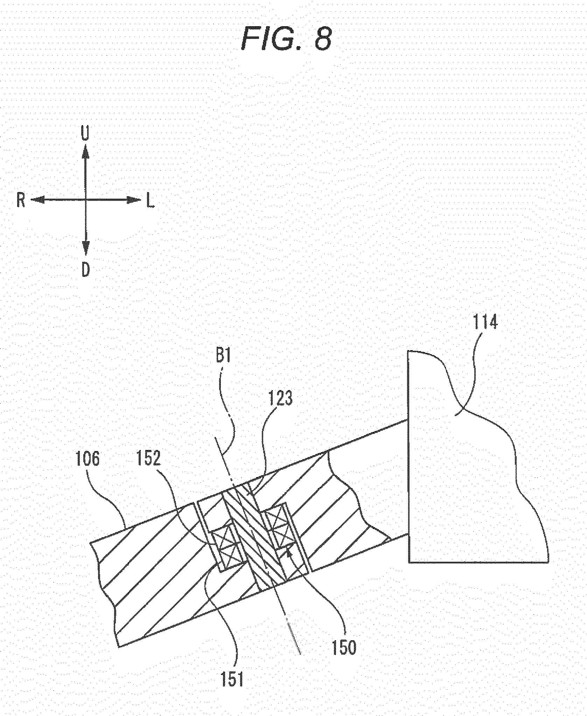

Fig. 8 is an enlarged view showing the right handlebar portion 106 and the right connecting portion 114. In Fig. 8, a connecting portion between the right handlebar portion 106 and the right connecting portion 114 is partially shown in section. As shown in Fig. 8, the left portion of the right handlebar portion 106 and a right portion of the right connecting portion 114 are connected together via a right middle shaft portion 123 (an example of a torsional deformation facilitating portion). A lower portion of the right middle shaft portion 123 is fixed to the right handlebar portion 106 so as not to turn. An upper portion of the right middle shaft portion 123 is fixed to the right connecting portion 114 so as not to turn. The right middle shaft portion 123 extends in the direction of a right twisting axis B1. The right twisting axis B1 of the right middle shaft portion 123 extends in the direction which is at right angles to a direction in which the right handlebar portion 106 extends. The right handlebar portion 106 can be displaced about the right twisting axis B1 relative to the right connecting portion 114. As shown in Fig. 7, when dividing the vehicle 100 into three portions such as a right portion, a central portion and a left portion in a left-and-right direction of the vehicle 100 when looking at the vehicle 100 standing upright from a front thereof, the right middle shaft portion 123 is positioned at the right portion.

As shown in Fig. 8, a right torque sensor 150 is provided on an outer circumference of the right middle shaft portion 123. The right torque sensor 150 is a magnetostrictive torque sensor. The right torque sensor 150 includes a pickup coil 151 and a housing 152 which accommodates the pickup coil 151. The housing 152 is fixed to the right connecting portion 114. The pickup coil 151 is provided so as to face the right middle shaft portion 123. The pickup coil 151 is configured to detect a variation in electric signal according to a torsional deformation of the right middle shaft portion 123 about the right twisting axis B1. The right torque sensor 150 is configured to detect the steering torque which is inputted from the right grip portion 104 based on a torsional deformation of the right middle shaft portion 123. The right torque sensor 150 is configured to detect at least part of the steering torque which is inputted into the steering torque transmission mechanism 101 based on a torsional deformation of the right middle shaft portion 123.

The left grip portion 105 is provided at a left portion of the left handlebar portion 107. A right portion of the left handlebar portion 107 is connected to an upper portion of the left suspension device 113. The left connecting portion 115 is provided at a right portion of the left handlebar portion 107. The left handlebar portion 107 is connected to the left suspension device 113 via the left connecting portion 115.

The right portion of the left handlebar portion 107 and a left portion of the left connecting portion 115 are connected together via a left middle shaft portion 124 (an example of the torsional deformation facilitating portion). A lower portion of the left middle shaft portion 124 is fixed to the left handlebar portion 107 so as not to turn. An upper portion of the left middle shaft portion 124 is fixed to the left connecting portion 115 so as not to turn. The left middle shaft portion 124 extends in the direction of a left twisting axis B2. The left twisting axis B2 of the left middle shaft portion 124 extends in the direction which is at right angles to a direction in which the left handlebar portion 107 extends. The left handlebar portion 107 can be displaced about the left twisting axis B2 relative to the left connecting portion 115. When dividing the vehicle 100 into three portions such as the right portion, the central portion and the left portion in the left-and-right direction of the vehicle 100 when looking at the vehicle 100 standing upright and kept unturned from the front thereof, the left middle portion 124 is positioned at the left portion.

A left torque sensor 160 is provided on an outer circumference of the left middle shaft portion 124. The configuration of the left torque sensor 160 is the same as that of the right torque sensor 150. The left torque sensor 160 is configured to detect steering torque which is inputted from the left grip portion 105 based on a torsional deformation of the left middle shaft portion 124 about the left twisting axis. The left torque sensor 160 is configured to detect at least part of steering torque which is inputted into the steering torque transmission mechanism 101 based on a torsional deformation of the left middle shaft portion 124 about the left twisting axis.

The upper portion of the right suspension device 112 is fixed to a right portion of the top bridge 110. The upper portion of the right suspension device 112 is connected to the right handlebar portion 106 below the top bridge 110. A middle portion of the right suspension device 112 in an up-and-down direction thereof is fixed to the bottom bridge 111. A lower portion of the right suspension device 112 supports the front wheel 103 rotatably.

The upper portion of the left suspension device 113 is fixed to a left portion of the top bridge 110. The upper portion of the left suspension device 113 is connected to the left handlebar portion 107 below the top bridge 110. A middle portion of the left suspension device 113 in an up-and-down direction thereof is fixed to the bottom bridge 111. A lower portion of the left suspension device 113 supports the front wheel 103 rotatably.

The top bridge 110 is connected to the upper portion of the right suspension device 112, the upper portion of the left suspension device 113 and an upper portion of the steering shaft 108. The upper portion of the right suspension device 112, the upper portion of the left suspension device 113 and the upper portion of the steering shaft 108 are prevented from being displaced relatively by the top bridge 110. The right portion of the top bridge 110 is connected to the right suspension device 112 above the right connecting portion 114. The left portion of the top bridge 110 is connected to the left suspension device 113 above the left connecting portion 115. A central portion of the top bridge 110 is fixed to the upper portion of the steering shaft 108.

The bottom bridge 111 is connected to the middle portion of the right suspension device 112, the middle portion of the left suspension device 113 and a lower portion of the steering shaft 108. The middle portion of the right suspension device 112, the middle portion of the left suspension device 113 and the lower portion of the steering shaft 108 are prevented from being displaced relatively by the bottom bridge 111. The bottom bridge 111 is connected to the right suspension device 112 and the left suspension device 113 below the top bridge 110. The bottom bridge 111 is fixed to a lower end portion of the steering shaft 108.

The steering shaft 108 is supported in the headpipe 109 so as to turn therein. The headpipe 109 is fixed to the body frame 102. The headpipe 109 is positioned below the top bridge 110 and above the bottom bridge 111. An upper end of the steering shaft 108 is positioned above an upper end of the headpipe 109. A lower end of the steering shaft 108 is positioned below a lower end of the headpipe 109. The steering shaft 108 is fixed to the top bridge 110 and the bottom bridge 111.

An upper bearing 116 and a lower bearing 117, which is positioned below the upper bearing 116, are provided in an interior of the headpipe 109. The upper bearing 116 and the lower bearing 117 support the steering shaft 108 so as to turn relative to the headpipe 109.

For example, when the rider grips on the right grip portion 104 and the left grip portion 105 and moves to push the right grip portion 104 forwards while moving to pull the left grip portion 105 backwards, the front wheel 103 is steered or turned to the left. Namely, when seen from above, the steering shaft 108 turns counterclockwise about the headpipe 109.

A steering force inputted into the right grip portion 104 by the rider is transmitted to the right handlebar portion 106. Steering torque inputted into the right handlebar portion 106 is transmitted to the right connecting portion 114 via the right middle shaft portion 123. When the steering torque is inputted into the right handlebar portion 106, the lower portion of the right middle shaft 123 which is fixed to the right handlebar portion 106 is displaced relative to the upper portion thereof which is fixed to the right connecting portion 114 about the right twisting axis B1 in a turning direction. When the steering torque is inputted into the right handlebar portion 106, the lower portion of the right middle shaft portion 123 is twisted about the right twisting axis B1 relative to the upper portion thereof.
Further, the steering torque inputted into the right connecting portion 114 is transmitted from the upper portion of the right suspension device 112 to the front wheel 103 via the top bridge 110, the steering shaft 108, the bottom bridge 111, the middle portion of the right suspension device 112 and the lower portion of the right suspension device 112.

A steering force inputted into the left grip portion 105 by the rider is transmitted to the left handlebar portion 107. The steering torque inputted into the left handlebar portion 107 is transmitted to the left connecting portion 115 via the left middle shaft portion 124. When the steering torque is inputted into the left handlebar portion 107, the left middle shaft portion 124 is twisted about the left twisting axis B2. Further, the steering torque inputted into the left connecting portion 115 is transmitted from the upper portion of the left suspension device 113 to the front wheel 103 via the top bridge 110, the steering shaft 108, the bottom bridge 111, the middle portion of the left suspension device 113 and the lower portion of the left suspension device 113.

Namely, in this embodiment, a transmission path of the steering torque inputted from the right hand of the rider is made up of, from an upstream side to a downstream side, the right grip portion 104, the right handlebar portion 106, the right middle shaft portion 123, the right connecting portion 114, the upper portion of the right suspension device 112, the top bridge 110, the steering shaft 108, the bottom bridge 111, and the lower portion of the right suspension device 112 in that order. Similarly, a transmission path of the steering torque inputted from the left hand of the rider is made up of, from an upstream side to a downstream side, the left grip portion 105, the left handlebar portion 107, the left middle shaft portion 124, the left connecting portion 115, the upper portion of the left suspension device 113, the top bridge 110, the steering shaft 108, the bottom bridge 111, and the lower portion of the left suspension device 113 in that order. Of the upper bearing 116 and the lower bearing 117 which support the steering shaft 108, the upper bearing 116 constitutes a bearing which is positioned most upstream.
Part of the steering torque inputted into the right connecting portion 114 is transmitted from the middle portion of the right suspension device 112 to the front wheel 103 via the lower portion of the right suspension device 112. Part of the steering torque inputted into the left connecting portion 115 is transmitted from the middle portion of the left suspension device 113 to the front wheel 103 via the lower portion of the left suspension device 113.

In this embodiment, the right middle shaft portion 123 and the left middle shaft portion 124 are provided as a torsional deformation facilitating portion which is twisted to be deformed easily by means of steering torque which is inputted from the right grip portion 104 and the left grip portion 105 by the rider.

The right middle shaft portion 123, which is provided at the left portion of the right handlebar portion 106, is provided on the left of the right grip portion 104. The right middle shaft portion 123 is provided on the right of a center of the vehicle 100 in the left-and-right direction with the vehicle I standing upright and kept unturned .

The left middle shaft portion 124, which is provided at the right portion of the left handlebar portion 107, is provided on the left of the left grip portion 105, The left middle shaft portion 124 is provided on the left of the center of the vehicle 100 in the left-and-right direction with the vehicle I standing upright and kept unturned. The right middle shaft portion 123 and the left middle shaft portion 124 are provided laterally symmetrically with each other with respect to the center of the vehicle 100 in the left-and-right direction thereof.

The vehicle 100 has the right torque sensor 150 which detects at least part of steering torque inputted into the steering torque transmission mechanism based on a torsional deformation of the right middle shaft portion 123 and the left torque sensor 160 which detects at least part of steering torque inputted into the steering torque transmission mechanism based on a torsional deformation of the left middle shaft portion 124. The right middle shaft portion 123 and the left middle shaft portion 124 constitute portions having lowest rigidity among the constituent elements of the steering torque transmission mechanism 101 as a whole.

In this embodiment, the steering shaft 108 is supported by the upper bearing 116 and the lower bearing 117. In the steering torque transmission path, the upper bearing 116 constitutes the bearing which is positioned most upstream. Both the right middle shaft portion 123 and the left middle shaft portion 124 are provided upstream of the upper bearing 116 which is positioned most upstream in the steering torque transmission path. By adopting this configuration, even though a bending force is applied to the part which makes up the steering torque transmission path from the side of the front wheel 103, the bending force can be supported efficiently by both of the upper bearing 116 and the lower bearing 117, whereby the enlargement in size of the vehicle 100 is restrained.

In addition, even though a bending force is applied to the steering torque transmission path, since the bending force is supported by both the upper bearing 116 and the lower bearing 117, it becomes difficult for the bending force to be applied to the right middle shaft portion 123 and the left middle shaft portion 124 which are provided on the upstream side of the upper bearing 116. This obviates the necessity of enhancing the rigidity of the right middle shaft portion 123 and the left middle shaft portion 124, and the rigidity of the other portions does not have to be increased more than required. This suppresses the enlargement in size of the vehicle 100.

### <Third Embodiment>

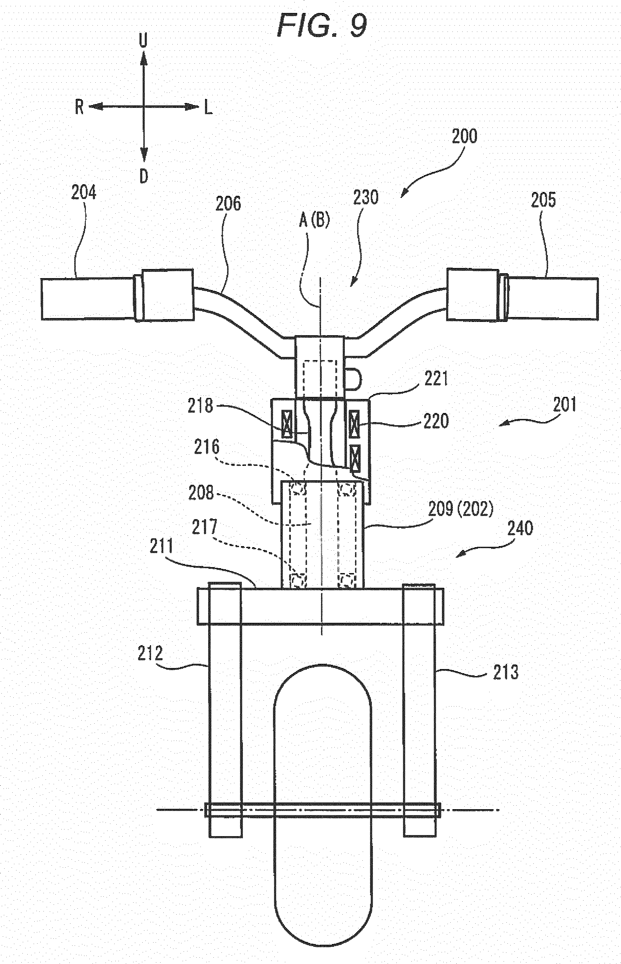

Fig. 9 is a schematic view of a vehicle 200 according to a third embodiment of the invention as seen from a front thereof. In the vehicle 200 shown in Fig. 9, a torsional deformation facilitating portion 218 is provided on a steering shaft 208.

The vehicle 200 includes a steering torque transmission mechanism 201, a body frame 202 including a headpipe 209, and a front wheel 203. The steering torque transmission mechanism 201 transmits the steering torque which is inputted from a rider to the front wheel 203. The steering torque transmission mechanism 201 has the steering shaft 208, a handlebar assembly 230 and a front wheel connecting portion 240. The steering torque transmission mechanism 201 transmits mechanically the steering torque inputted into the handlebar assembly 230 to the front wheel 203.

The handlebar assembly 230 is a group of parts which is connected directly or indirectly to the steering shaft 208. The handlebar assembly 230 includes a right grip portion 204, a left grip portion 205 and a handlebar portion 206.

A front wheel connecting portion 240 includes a bottom bridge 211, a right suspension device 212 and a left suspension device 213.

The handlebar portion 206 is fixed to an upper portion of the steering shaft 208. The right grip portion 204 is provided at a right portion of the handlebar portion 206. The left grip portion 205 is provided at a left portion of the handlebar portion 206. A middle portion of the handlebar portion 206 in a left-and-right direction thereof is fixed to the steering shaft 208.

The steering shaft 208 is supported in the headpipe 209 so as to turn therein. The headpipe 209 is fixed to the body frame 202. The headpipe 209 is positioned above the bottom bridge 211. An upper end of the steering shaft 208 is positioned above an upper end of the headpipe 209. A lower end of the steering shaft 208 is positioned below a lower end of the headpipe 209. A lower portion of the steering shaft 208 is fixed to the bottom bridge 211.

An upper bearing 216 and a lower bearing 217 which are positioned below the upper bearing 216 are provided in the headpipe 209. The upper bearing 216 and the lower bearing 217 support the steering shaft 208 so as to turn relative to the headpipe 209.

A right portion of the bottom bridge 211 is fixed to an upper portion of the right suspension device 212. A left portion of the bottom bridge 211 is fixed to an upper portion of the left suspension device 213. A middle portion of the bottom bridge 211 in a left-and-right direction thereof is fixed to the lower portion of the steering shaft 208. The upper portion of the right suspension device 212, the upper portion of the left suspension device 213 and the lower portion of the steering shaft 208 are prevented from being displaced relatively by the bottom bridge 211. A lower portion of the right suspension device 212 and a lower portion of the left suspension device 213 support the front wheel 203 rotatably.

For example, when the rider grips on the right grip portion 204 and the left grip portion 205 and moves to push the right grip portion 204 forwards while moving to pull the left grip portion 205 backwards, the handlebar portion 206 turns counterclockwise when seen from above, whereby the front wheel 203 is steered to the left. Namely, when seen from above, the steering shaft 208 turns counterclockwise about the headpipe 209.

A steering force which is inputted into the right grip portion 204 and the left grip portion 205 by the rider is transmitted to the right suspension device 212 and the left suspension device 213 via the handlebar portion 206, the steering shaft 208 and the bottom bridge 211. whereby the front wheel 203 is steered,

Namely, in this embodiment, a steering torque transmission path is made up of, from an upstream side to a downstream side, the right grip portion 204 and the left grip portion 205, the handlebar portion 206, the steering shaft 208, the bottom bridge 211, the right suspension device 212 and the left suspension device 213, and the front wheel 203 in that order. Of the upper bearing 216 and the lower bearing 217 which support the steering shaft 208, the bearing which is positioned most upstream in the steering torque transmission path is the upper bearing 216.

In this embodiment, the torsional deformation facilitating portion 218 is provided at the upper portion of the steering shaft 208. The torsional deformation facilitating portion 218 can be deformed in a turning direction about a twisting axis B. The torsional deformation facilitating portion 218 can be twisted to be deformed about the twisting axis B. The twisting axis B is coaxial with a steering axis A of the steering shaft 208.

An upper portion of the torsional deformation facilitating portion 218 is fixed to the handlebar portion 206. A lower portion of the torsional deformation facilitating portion 218 is supported by the upper bearing 216. When the rider displaces the right grip portion 204 and the left grip portion 205 to turn the handlebar portion 206, the torsional deformation facilitating portion 218 is twisted. When dividing the vehicle 200 into three portions such as a right portion, a central portion and a left portion when looking at the vehicle 200 standing upright and kept unturned from the front thereof, the torsional deformation facilitating portion 218 is positioned at the central portion.

The torsional deformation facilitating portion 218 constitutes a portion having such lowest rigidity as to be twisted easily in the whole of the steering shaft 208. The torsional deformation facilitating portion 218 can be provided as, for example, a portion having a smallest diameter in the steering shaft 208 or a portion having a rectangular cross section which tends to have lower rigidity than that of a portion having a circular cross section. The torsional deformation facilitating portion 218 is easier to be twisted and deformed by means of steering torque than the handlebar portion 206, the bottom bridge 211, the right suspension device 212 and the left suspension device 213 which make up the steering torque transmission path.

The vehicle 200 has a steering torque detection device 220 which detects a variation in physical amount based on a torsional deformation of the torsional deformation facilitating portion 218. The steering torque detection device 220 can detect an amount of twisting of the torsional deformation facilitating portion 218.
In this embodiment, the steering torque detection device 220 is a magnetostrictive sensor having a sensor coil. The steering torque detection device 220 is provided so as to face the torsional deformation facilitating portion 218. A cylindrical housing 221 to which the sensor coil is fixed is provided so as to face the torsional deformation facilitating portion 218. The housing 221 is provided above the headpipe 209. The housing 221 is provided below the handlebar portion 206. The housing 221 is fixed to the body frame 202. The housing 221 is provided above the upper bearing 216.

In this embodiment, the steering shaft 208 is supported by the upper bearing 216 and the lower bearing 217. In the steering torque transmission path, the bearing which is positioned most upstream is the upper bearing 216. The torsional deformation facilitating portion 218 is provided on an upstream side of the upper bearing 216 which is positioned most upstream in the steering torque transmission path. By adopting this configuration, even though a bending force is applied to the part which makes up the steering torque transmission path from the side of the front wheel 203, the bending force can be supported efficiently by both of the upper bearing 216 and the lower bearing 217, whereby the enlargement in size of the vehicle 200 is restrained.

In addition, even though a bending force is applied to the steering torque transmission path, since the bending force is supported by both the upper bearing 216 and the lower bearing 217, it becomes difficult for the bending force to be applied to the torsional deformation facilitating portion 218 which is provided on the upstream side of the upper bearing 216. This obviates the necessity of enhancing the rigidity of the torsional deformation facilitating portion 218, and the rigidity of the other portions does not have to be increased more than required. This suppresses the enlargement in size of the vehicle 200.

In this embodiment, the steering torque detection device 220 is provided on the headpipe 209 which makes up part of the body frame 202. The torsional deformation facilitating portion 218 is displaced relative to the body frame 202. Because of this, it is easy to ensure a great variation amount of the torsional deformation facilitating portion 218 as seen from the body frame 202, this enabling the steering torque detection device 220 to easily detect a variation in physical amount based on a torsional deformation of the torsional deformation facilitating portion 218. In addition, since the body frame 202 is given relatively high rigidity, the steering torque detection device 220 is easily fixed to the body frame 202 with high supporting rigidity. This enables steering torque to be detected with high accuracy.

In the embodiments that have been described heretofore, the invention is described as being applied to the motorcycle. However, the invention can also be applied to leaning vehicles including a three-wheeled vehicle having two front wheels and a rear wheel, a three-wheeled vehicle having a front wheel and two rear wheels and a four-wheeled vehicle having two front wheels and two rear wheels.
For example, the invention can also be applied to a vehicle including a parallelogram type link mechanism which supports a right front wheel and a left front wheel so as to be displaced relative to a body frame in an up-and-down direction thereof. In this vehicle, a pitman arm which is fixed to the steering shaft so as to turn together with the steering shaft and a tie rod which connects the pitman arm and the right front wheel and the left front wheel together correspond to a front wheel connecting portion which connects a steering shaft and the front wheels together.
Additionally, the invention can also be applied to a vehicle including a double wishbone type link mechanism which supports a right front wheel and a left front wheel so as to be displaced relative to a body frame in an up-and-down direction thereof. In this vehicle, too, a pitman arm which is fixed to a steering shaft so as to turn together with the steering shaft and a tie rod which connects the pitman arm and the right front wheel and the left front wheel together correspond to a front wheel connecting portion which connects the steering shaft and the front wheels together.

In the first embodiment, when looking at the vehicle standing upright and kept unturned from the front thereof, the whole of the torque sensor 90 is described as being positioned on the right of the left suspension device 6 and on the left of the right suspension device 7 and also being positioned above the lower end of the top bridge 50 which is positioned above the headpipe 8. However, the invention is not limited thereto. When looking at the vehicle standing upright and kept unturned from the front thereof, at least part of the torque sensor should be positioned on the right of the left suspension device and on the left of the right suspension device in relation to the left-and-right direction and also should be positioned above the lower end of the top bridge which is positioned above the headpipe.

In the first embodiment and the third embodiment, the vehicle 1 is described as including the straight bar-type handlebar portion 26. However, the invention is not limited thereto. For example, a curved handlebar, a handlebar which is divided at a center in a left-and-right direction thereof, and the like can be adopted.

When referred to in this invention, the torsional deformation means a deformation involving a displacement in a circumferential direction of an axis which is generated when torque acting about the axis in inputted. When referred to in this invention, the torsional deformation is a deformation involving a displacement in a circumferential direction of an axis which is generated by steering torque which is inputted from the right grip portion or the left grip portion. This axis is the axis of torsional deformation and can be expressed differently as a twisting axis. When referred to in this invention, the torsional deformation includes (A) an elastic deformation of part of one component in the circumferential direction of the axis. The elastic deformation in the circumferential direction of the twisting axis is a deformation involving a displacement in the circumferential direction of the axis. In this case, it is possible to adjust the elastic deformation in the circumferential direction of the axis relative to the steering torque by adjusting a relationship between the rigidity of the part of the one component and the rigidity of the other portion. When referred to in this invention, the torsional deformation may include (B) a deformation in which two components deflect relatively in terms of position in the circumferential direction of the axis. In this case, it is possible to adjust the relative positional deflection in the circumferential direction of the axis relative to the steering torque by providing an clastic member such as a spring in the circumferential direction of the axis between the two components.
It should be noted that it is more preferable that the invention adopts the torsional deformation (A) in which part of one component is elastically deformed in the circumferential direction of the axis. The steering torque detection device which is described in the first embodiment to the third embodiment detects steering torque based on the torsional deformation described under (A) above. Because of this, the first embodiment to the third embodiment are more preferable embodiments.

In the first embodiment, the second embodiment and the third embodiment, the torque sensor 90 is described as being the magnetostrictive torque sensor. However, the invention is not limited thereto. Sensors can be adopted which can detect a variation in physical amount based on a relative displacement between the lower member 30 and the shaft member 12, and the sensors include, for example, a strain sensor which can detect a strain in the outer cylindrical member 13 and an encoder which can detect a relative turning amount between the lower member 30 and the shaft member 12.
As the steering torque detection device, for example, a torque sensor can be adopted which is described in WO2014-042267. When adopting this torque sensor, a configuration can be considered which will be described below. As this occurs, a torque sensor detects steering torque based on the torsional deformation described under (B) above.
A sensor mounting part on which the torque sensor is mounted is a part which makes up a steering torque transmission path. The sensor mounting part has an upstream part and a downstream part which can turn about a twisting axis, and a connecting coil spring which connects the upstream part and the downstream part together. One end portion of the connecting coil spring is fixed to the upstream part and the other end portion thereof is fixed to the downstream part. The connecting coil spring is configured to transmit turning torque of the upstream part to the downstream part. The torque sensor is mounted on the sensor mounting part. The torque sensor has a ring-shaped permanent magnet which is mounted on either the upstream part or the downstream part, an induction ring which is mounted on the other of the upstream part or the downstream part, and a magnetism detecting portion. The ring-shaped permanent magnet and the induction ring are disposed concentrically with the twisting axis.
The ring-shaped permanent magnet is disposed in a form in which magnetic poles which are magnetized in the direction of the twisting axis are reversed alternately in a circumferential direction. The magnetic poles each have a certain circumferential width.
The induction ring has a plurality of projecting portions and a ring main body. The projecting portions each have a circumferential width. The circumferential width of at least one of the projecting portions is smaller than the circumferential width of at least one of the magnetic poles of the permanent magnet. The ring main body is provided concentrically with the twisting axis. In the ring main body, the intensity of magnetization changes according to the positions of the projecting portions in relation to the positions of the magnetic poles of the permanent magnet.
The magnetism detecting portion detects a magnetic flux of the ring main body. When steering torque inputted from a grip portion is applied to the upstream part, the connecting coil spring is elastically deformed. This changes the positions of the upstream part and the downstream part about the twisting axis. This positional change constitutes a torsional deformation. The steering torque is transmitted from the upstream part to the downstream part. In this configuration, the upstream part, the connecting coil spring and the downstream part constitute a torsional deformation facilitating portion.
When the upstream part is displaced about the twisting axis relative to the downstream part, the intensity of magnetization of the ring main body changes according to the amount of displacement of the upstream part relative to the downstream part. The magnetism detecting portion detects a magnetic flux of the ring main body and outputs an electric signal which corresponds to an amount of positional deviation of the upstream part relative to the downstream part about the twisting axis in a turning direction. Namely, the magnetism detecting portion can detect at least part of the steering torque inputted into the steering torque transmission mechanism based on the torsional deformation of the upstream part relative to the downstream part.

It should be noted that the expression reading, "the turning axis A follows the up-and-down direction of the vehicle 1" includes a case where the turning axis A is parallel to the up-and-down direction of the vehicle 1 and also a case where an angle at which the turning axis A intersects the up-and-down direction of the vehicle 1 is less than 45 degrees.

### [Industrial Applicability]

According to the invention, the leaning vehicle is provided which has the steering torque sensor, which has high supporting rigidity against bending and which is restrained from being enlarged in size.

### [Description of Reference Numerals]

- 1: Vehicle (Leaning vehicle)
- 2: body frame
- 3: Engine
- 4: Front wheel
- 5: Rear wheel
- 6: Left suspension device
- 7: Right suspension device
- 8: headpipe
- 9: Steering shaft
- 10: Steering torque transmission mechanism
- 11: Front wheel connecting portion
- 12: Shaft member
- 13: Outer cylindrical member
- 13: Torsional deformation facilitating portion
- 14: Bottom bridge
- 16: First bearing
- 17: Second bearing
- 18: Right assisting transmission member
- 19: Left assisting transmission member
- 20: Handlebar assembly
- 21: Handlebar connecting portion
- 22: Right grip portion
- 23: Left grip portion
- 24: Upper bearing (Upstream bearing)
- 25: Lower bearing
- 26: Handlebar portion
- 30: Lower member
- 32: Through hole
- 40: Upper member
- 50: Top bridge
- 51: Left supporting hole
- 52: Right supporting hole
- 53: Rear supporting hole
- 54: Front supporting hole
- 55: Left middle hole
- 56: Right middle hole
- 57: Rubber ring
- 60: Assisting force application mechanism
- 70: Motor
- 71: Output shaft
- 80: Speed reducer
- 81: Middle shaft
- 82: First gearwheel
- 83: Second gearwheel
- 84: Third gearwheel
- 85: Housing
- 90: Torque sensor (Steering torque detection device)
- 91: Pickup coil
- 92: Mounting substrate
- 93: Bush
- 100: Vehicle
- 101: Steering torque transmission mechanism
- 102: body frame
- 103: Front wheel
- 104: Right grip portion
- 105: Left grip portion
- 106: Right handlebar portion
- 107: Left handlebar portion
- 108: Steering shaft
- 109: headpipe
- 110: Top bridge
- 111: Bottom bridge
- 112: Right suspension device
- 113: Left suspension device
- 114: Right connecting portion
- 115: Left connecting portion
- 116: Upper bearing
- 117: Lower bearing

- 130: Handlebar assembly
- 140: Front wheel connecting portion
- 150: Right torque sensor
- 151: Pickup coil
- 152: Housing
- 160: Left torque sensor
- 200: Vehicle
- 201: Steering torque transmission mechanism
- 202: body frame
- 203: Front wheel
- 204: Right grip portion
- 205: Left grip portion
- 206: Handlebar portion
- 208: Steering shaft
- 209: headpipe
- 211: Bottom bridge
- 212: Right suspension device
- 213: Left suspension device
- 216: Upper bearing
- 217: Lower bearing
- 218: Torsional deformation Facilitating portion
- 220: Steering torque detection device
- 221: Housing
- 230: Handlebar assembly
- 240: Front wheel connecting portion

## Claims

1. A leaning vehicle comprising:
a body frame (2,102,202) which includes a headpipe (8,109,209) provided at a center of the vehicle in a left-and-right direction thereof and which leans to a right in the left-and-right direction of the vehicle when the vehicle turns right and leans to a left in the left-and-right direction of the vehicle when the vehicle turns left;
a front wheel (4,103,203) suspended on the body frame (2,102,202) and turnable in the left-and-right direction;
a steering torque transmission mechanism (10,101,201) which is configured to mechanically transmit steering torque inputted into a handlebar assembly (20,130,230) to the front wheel (4,103,203) and which includes:
the handlebar assembly (20,130,230) which is connected directly or indirectly to a steering shaft (9,108,208) and which has:
the steering shaft (9,108,208) which is supported on the headpipe (8,109,209) via a plurality of bearings (24,25,116,117,216,217) so as to turn within a rotational angle range of smaller than 180 degrees but so as not to turn within a rotational angle range of equal to or greater than 180 degrees and whose turning axis (A) is provided at the center of the vehicle in the left-and-right direction thereof so as to extend along an up-and-down direction of the vehicle;
a right grip portion (22,104,204) which is provided on the right of the center of the vehicle in the left-and-right direction thereof for a rider to grip thereon and
a left grip portion (23,105,205) which is provided on the left of the center of the vehicle in the left-and-right direction thereof for the rider to grip thereon; and
a front wheel connecting portion (11,140,240) connecting the steering shaft (9,108,208) and the front wheel (4,103,203) together;
a steering torque detection device (90,120,121,220) for detecting at least part of steering torque which is inputted into the steering torque transmission mechanism (10,101,201), wherein
the steering torque transmission mechanism (10,101,201) includes a torsional deformation facilitating portion (13,123,124,218) which is provided upstream of a portion of the steering shaft (9,108,208) which is supported by an upstream bearing which is situated most upstream in the plurality of bearings (24,25,116,117,216,217) in a steering torque transmission path which extends from the right grip portion (22,104,204) or the left grip portion (23,105,205) to the front wheel (4,103,203) and which is easily twisted to be deformed by steering torque inputted from the right grip portion (22,104,204) or the left grip portion (23,105,205), and wherein
the steering torque detection device (90,150,160,220) detects at least part of steering torque which is inputted into the steering torque transmission mechanism (10,101,201) based on a torsional deformation of the torsional deformation facilitating portion (13,123,124,218), the torsional deformation means a deformation involving a displacement in a circumferential direction of an axis which is generated when torque acting about the axis is inputted.

2. The leaning vehicle according to Claim 1, wherein the torsional deformation facilitating portion (13,123,124) is provided on the handlebar assembly (20,130).

3. The leaning vehicle according to Claim 2, wherein the handlebar assembly (130) includes a handlebar portion (106,107) and a handlebar connecting portion (114,115) which connects the handlebar portion (106,107) to the steering shaft (9,108,208) or the front wheel connecting portion (140), and wherein
the torsional deformation facilitating portion (123,124) is provided on the handlebar portion (106,107).

4. The leaning vehicle according to Claim 2, wherein the handlebar assembly (20) includes a handlebar portion (26) and a handlebar connecting portion (21) which connects the handlebar portion (26) to the steering shaft (9) or the front wheel connecting portion (11), and wherein
the torsional deformation facilitating portion (13) is provided on the handlebar connecting portion (21).

5. The leaning vehicle according to Claim 1, wherein the torsional deformation facilitating portion (218) is provided on the steering shaft (208).

6. The leaning vehicle according to any one of Claims 1 to 5, wherein the steering torque detection device (90,150,160) is provided on the handlebar assembly (20,130).

7. The leaning vehicle according to any one of Claims 1 to 6, wherein the handlebar assembly (130) includes a handlebar portion (106,107) and a handlebar connecting portion (114,115) which connects the handlebar portion (106,107) to the steering shaft (108) or the front wheel connecting portion (140), and wherein
the steering torque detection device (150,160) is provided on the handlebar portion (106,107).

8. The leaning vehicle according to any one of Claims 1 to 6, wherein the handlebar assembly (20) includes a handlebar portion (26) and a handlebar connecting portion (21) which connects the handlebar portion (26) to the steering shaft (9) or the front wheel connecting portion (11), and wherein the steering torque detection device (90) is provided on the handlebar connecting portion (21).

9. The leaning vehicle according to any one of Claims 1 to 5, wherein the steering torque detection device (220) is provided on the body frame (202).

10. The leaning vehicle according to any one of Claims 1 to 9, having a motor (70) which can input assisting steering torque to the steering torque transmission mechanism (10).

11. The leaning vehicle according to Claim 10, wherein the motor (70) inputs assisting steering torque to a portion lying downstream of a portion of the steering shaft (9) which is supported by the upstream bearing which is situated most upstream in the plurality of bearings (24,25) in a steering torque transmission path which extends from the handlebar assembly (20) to the front wheel (4).

## Patentansprüche

1. Ein Neige-Fahrzeug, das umfasst:
einen Körper-Rahmen (2, 102, 202), der ein Kopf-Rohr (8, 109, 209) enthält, das in einer Mitte des Fahrzeugs in einer Links-und-Rechts-Richtung desselben vorgesehen ist und der sich nach rechts in der Links-und-Rechts-Richtung des Fahrzeugs neigt, wenn das Fahrzeug nach rechts abbiegt, und sich nach links in der Links-und-Rechts-Richtung des Fahrzeugs neigt, wenn das Fahrzeug nach links abbiegt;
ein Vorder-Rad (4,103,203), das am Körper-Rahmen (2,102,202) aufgehängt ist und in der Links-und-Rechts-Richtung drehbar ist;
einen Lenk-Moment-Übertragungs-Mechanismus (10, 101, 201), der konfiguriert ist, um mechanisch ein Lenk-Moment, das in eine Lenkstangen-Anordnung (20, 130, 230) eingegeben ist, auf das Vorder-Rad (4, 103, 203) zu übertragen, und der beinhaltet:
die Lenkstangen-Anordnung (20,130,230), die direkt oder indirekt mit einer Lenk-Welle (9,108,208) verbunden ist und die aufweist:
die Lenk-Welle (9, 108, 208), die an dem Kopf-Rohr (8, 109, 209) über eine Mehrzahl von Lagern (24, 25, 116, 117, 216, 217) gelagert ist, so dass sie sich innerhalb eines Dreh-Winkel-Bereichs kleiner als 180 Grad dreht, aber so dass sie sich nicht innerhalb eines Dreh-Winkel-Bereichs von gleich oder größer als 180 Grad dreht, und deren Drehachse (A) in der Mitte des Fahrzeugs in dessen Links-und-Rechts-Richtung vorgesehen ist, so dass sie sich entlang einer Auf-und-Ab-Richtung des Fahrzeugs erstreckt;
einen rechten Griff-Abschnitt (22, 104, 204), der rechts von der Mitte des Fahrzeugs in dessen Links-und-Rechts-Richtung vorgesehen ist, damit ein Fahrer daran greifen kann, und
einen linken Griff-Abschnitt (23, 105, 205), der links von der Mitte des Fahrzeugs in dessen Links-und-Rechts-Richtung vorgesehen ist, damit der Fahrer daran greifen kann; und
einen Vorder-Rad-Verbindungs-Abschnitt (11, 140, 240), der die Lenk-Welle (9, 108, 208) und das Vorder-Rad (4, 103, 203) miteinander verbindet;
eine Lenk-Moment-Erfassungs-Vorrichtung (90, 120, 121, 220) zum Erfassen zumindest eines Teils des Lenk-Moments, das in den Lenk-Moment-Übertragungs-Mechanismus (10, 101, 201) eingegeben ist, wobei
der Lenk-Moment-Übertragungs-Mechanismus (10, 101, 201) einen Torsion-Verformungs-Erleichterungs-Abschnitt (13, 123, 124, 218) enthält, der stromaufwärts von einem Abschnitt der Lenk-Welle (9, 108, 208) vorgesehen ist, der durch ein stromaufwärts gelegenes Lager gelagert ist, das am weitesten stromaufwärts in der Mehrzahl von Lagern (24, 25, 116, 117, 216,217) in einem Lenk-Moment-Übertragungs-Weg gelegen ist, der sich von dem rechten Griff-Abschnitt (22, 104, 204) oder dem linken Griff-Abschnitt (23, 105, 205) zu dem Vorder-Rad (4, 103, 203) erstreckt, und der leicht verdreht werden kann, um durch ein Lenk-Moment verformt zu werden, das von dem rechten Griff-Abschnitt (22, 104, 204) oder dem linken Griff-Abschnitt (23, 105, 205) eingegeben ist, und wobei
die Lenk-Moment-Erfassungs-Vorrichtung (90, 150, 160, 220) zumindest einen Teil des Lenk-Moments erfasst, das in den Lenk-Moment-Übertragungs-Mechanismus (10, 101, 201) eingegeben ist, basierend auf einer Torsions-Verformung des Torsion-Verformungs-Erleichterungs-Abschnitts (13, 123, 124, 218), die Torsions-Verformung bedeutet eine Verformung, die eine Verschiebung in einer Umfangsrichtung einer Achse beinhaltet, die erzeugt wird, wenn ein Drehmoment, das um die Achse wirkt, eingegeben ist.

2. Das Neige-Fahrzeug gemäß Anspruch 1, wobei der Torsion-Verformungs-Erleichterungs-Abschnitt (13, 123, 124) an der Lenkstangen-Anordnung (20, 130) vorgesehen ist.

3. Das Neige-Fahrzeug gemäß Anspruch 2, wobei die Lenkstangen-Anordnung (130) einen Lenkstangen-Abschnitt (106, 107) und einen Lenkstangen-Verbindungs-Abschnitt (114, 115) aufweist, der den Lenkstangen-Abschnitt (106, 107) mit der Lenk-Welle (9, 108, 208) oder dem Vorder-Rad-Verbindungs-Abschnitt (140) verbindet, und wobei
der Torsion-Verformungs-Erleichterungs-Abschnitt (123, 124) an dem Lenkstangen-Abschnitt (106, 107) vorgesehen ist.

4. Das Neige-Fahrzeug gemäß Anspruch 2, wobei die Lenkstangen-Anordnung (20) einen Lenkstangen-Abschnitt (26) und einen Lenkstangen-Verbindungs-Abschnitt (21) aufweist, der den Lenkstangen-Abschnitt (26) mit der Lenk-Welle (9) oder dem Vorder-Rad-Verbindungs-Abschnitt (11) verbindet, und wobei
der Torsion-Verformungs-Erleichterungs-Abschnitt (13) am Lenkstangen-Verbindungs-Abschnitt (21) vorgesehen ist.

5. Das Neige-Fahrzeug gemäß Anspruch 1, wobei der Torsion-Verformungs-Erleichterungs-Abschnitt (218) an der Lenk-Welle (208) vorgesehen ist.

6. Das Neige-Fahrzeug gemäß irgendeinem der Ansprüche 1 bis 5, wobei die Lenk-Moment-Erfassungs-Vorrichtung (90, 150, 160) an der Lenkstangen-Anordnung (20, 130) vorgesehen ist.

7. Das Neige-Fahrzeug gemäß irgendeinem der Ansprüche 1 bis 6, wobei die Lenkstangen-Anordnung (130) einen Lenkstangen-Abschnitt (106, 107) und einen Lenkstangen-Verbindungs-Abschnitt (114, 115) aufweist, der den Lenkstangen-Abschnitt (106, 107) mit der Lenk-Welle (108) oder dem Vorder-Rad-Verbindungs-Abschnitt (140) verbindet, und wobei
die Lenk-Moment-Erfassungs-Vorrichtung (150, 160) an dem Lenkstangen-Abschnitt (106, 107) vorgesehen ist.

8. Das Neige-Fahrzeug gemäß irgendeinem der Ansprüche 1 bis 6, wobei die Lenkstangen-Anordnung (20) einen Lenkstangen-Abschnitt (26) und einen Lenkstangen-Verbindungs-Abschnitt (21) aufweist, der den Lenkstangen-Abschnitt (26) mit der Lenk-Welle (9) oder dem Vorder-Rad-Verbindungs-Abschnitt (11) verbindet, und wobei die Lenk-Moment-Erfassungs-Vorrichtung (90) an dem Lenkstangen-Verbindungs-Abschnitt (21) vorgesehen ist.

9. Das Neige-Fahrzeug gemäß irgendeinem der Ansprüche 1 bis 5, wobei die Lenk-Moment-Erfassungs-Vorrichtung (220) an dem Körper-Rahmen (202) vorgesehen ist.

10. Das Neige-Fahrzeug gemäß irgendeinem der Ansprüche 1 bis 9, das einen Motor (70) hat, der ein Unterstützungs-Lenk-Moment in den Lenk-Moment-Übertragungs-Mechanismus (10) eingeben kann.

11. Das Neige-Fahrzeug gemäß Anspruch 10, wobei der Motor (70) ein Unterstützungs-Lenk-Moment in einen Abschnitt eingibt, der stromabwärts von einem Abschnitt der Lenk-Welle (9) liegt, der von dem Lager, das am weitesten stromaufwärts in der Mehrzahl von Lagern (24, 25) in einem Lenk-Moment-Übertragungs-Weg, der sich von der Lenkstangen-Anordnung (20) zum Vorder-Rad (4) erstreckt, liegt, gelagert ist.

## Revendications

1. Véhicule à inclinaison comprenant :
un cadre de carrosserie (2, 102, 202) qui comporte un tuyau de tête (8, 109, 209) prévu au centre du véhicule dans une direction gauche-droite de celui-ci et qui s'incline vers la droite dans la direction gauche-droite du véhicule lorsque le véhicule tourne à droite et s'incline vers la gauche dans la direction gauche-droite du véhicule lorsque le véhicule tourne à gauche ;
une roue avant (4, 103, 203) suspendue sur le cadre de carrosserie (2, 102, 202) et pouvant tourner dans la direction gauche-droite ;
un mécanisme de transmission de couple de direction (10, 101, 201) qui est configuré pour transmettre mécaniquement un couple de direction entré dans un ensemble guidon (20, 130, 230) à la roue avant (4, 103, 203) et qui comporte :
l'ensemble guidon (20, 130, 230) qui est relié directement ou indirectement à un arbre de direction (9, 108, 208) et qui a :
l'arbre de direction (9, 108, 208) qui est supporté sur le tuyau de tête (8, 109, 209) par l'intermédiaire d'une pluralité de paliers (24, 25, 116, 117, 216, 217) de manière à tourner dans une plage d'angle de rotation inférieure à 180 degrés mais de manière à ne pas tourner dans une plage d'angle de rotation supérieure ou égale à 180 degrés et dont l'axe de rotation (A) est prévu au centre du véhicule dans la direction gauche-droite de celui-ci de manière à s'étendre le long d'une direction de haut en bas du véhicule ;
une partie de saisie droite (22, 104, 204) qui est prévue à droite du centre du véhicule dans la direction gauche-droite de celui-ci pour qu'un conducteur puisse la saisir et
une partie de saisie gauche (23, 105, 205) qui est prévue à gauche du centre du véhicule dans la direction gauche-droite de celui-ci pour que le conducteur puisse la saisir ; et
une partie de liaison de roue avant (11, 140, 240) reliant ensemble l'arbre de direction (9, 108, 208) et la roue avant (4, 103, 203) ;
un dispositif de détection de couple de direction (90, 120, 121, 220) pour détecter au moins une partie du couple de direction qui est entré dans le mécanisme de transmission de couple de direction (10, 101, 201), où
le mécanisme de transmission de couple de direction (10, 101, 201) comporte une partie facilitant la déformation en torsion (13, 123, 124, 218) qui est prévue en amont d'une partie de l'arbre de direction (9, 108, 208) qui est supportée par un palier amont qui est situé le plus en amont dans la pluralité de paliers (24, 25, 116, 117, 216, 217) dans un trajet de transmission de couple de direction qui s'étend de la partie de saisie droite (22, 104, 204) ou de la partie de saisie gauche (23, 105, 205) à la roue avant (4, 103, 203) et qui est facilement tordue pour être déformée par un couple de direction entré à partir de la partie de saisie droite (22, 104, 204) ou de la partie de saisie gauche (23, 105, 205), et où
le dispositif de détection de couple de direction (90, 150, 160, 220) détecte au moins une partie du couple de direction qui est entré dans le mécanisme de transmission de couple de direction (10, 101, 201) sur la base d'une déformation en torsion de la partie facilitant la déformation en torsion (13, 123, 124, 218), la déformation en torsion signifie une déformation impliquant un déplacement dans une direction circonférentielle d'un axe qui est généré lorsqu'un couple agissant autour de l'axe est entré.

2. Véhicule à inclinaison selon la revendication 1, dans lequel la partie facilitant la déformation en torsion (13, 123, 124) est prévue sur l'ensemble guidon (20, 130).

3. Véhicule à inclinaison selon la revendication 2, dans lequel l'ensemble guidon (130) comporte une partie de guidon (106, 107) et une partie de liaison de guidon (114, 115) qui relie la partie de guidon (106, 107) à l'arbre de direction (9, 108, 208) ou à la partie de liaison de roue avant (140), et dans lequel
la partie facilitant la déformation en torsion (123, 124) est prévue sur la partie de guidon (106, 107).

4. Véhicule à inclinaison selon la revendication 2, dans lequel l'ensemble guidon (20) comporte une partie de guidon (26) et une partie de liaison de guidon (21) qui relie la partie de guidon (26) à l'arbre de direction (9) ou à la partie de liaison de roue avant (11), et dans lequel
la partie facilitant la déformation en torsion (13) est prévue sur la partie de liaison de guidon (21).

5. Véhicule à inclinaison selon la revendication 1, dans lequel la partie facilitant la déformation en torsion (218) est prévue sur l'arbre de direction (208).

6. Véhicule à inclinaison selon l'une quelconque des revendications 1 à 5, dans lequel le dispositif de détection de couple de direction (90, 150, 160) est prévu sur l'ensemble guidon (20, 130).

7. Véhicule à inclinaison selon l'une quelconque des revendications 1 à 6, dans lequel l'ensemble guidon (130) comporte une partie de guidon (106, 107) et une partie de liaison de guidon (114, 115) qui relie la partie de guidon (106, 107) à l'arbre de direction (108) ou à la partie de liaison de roue avant (140), et dans lequel
le dispositif de détection de couple de direction (150, 160) est prévu sur la partie de guidon (106, 107).

8. Véhicule à inclinaison selon l'une quelconque des revendications 1 à 6, dans lequel l'ensemble guidon (20) comporte une partie de guidon (26) et une partie de liaison de guidon (21) qui relie la partie de guidon (26) à l'arbre de direction (9) ou à la partie de liaison de roue avant (11), et dans lequel le dispositif de détection de couple de direction (90) est prévu sur la partie de liaison de guidon (21).

9. Véhicule à inclinaison selon l'une quelconque des revendications 1 à 5, dans lequel le dispositif de détection de couple de direction (220) est prévu sur le cadre de carrosserie (202).

10. Véhicule à inclinaison selon l'une quelconque des revendications 1 à 9, ayant un moteur (70) qui peut entrer un couple de direction d'assistance au mécanisme de transmission de couple de direction (10).

11. Véhicule à inclinaison selon la revendication 10, dans lequel le moteur (70) entre un couple de direction d'assistance à une partie située en aval d'une partie de l'arbre de direction (9) qui est supportée par le palier amont qui est situé le plus en amont dans la pluralité de paliers (24, 25) dans un trajet de transmission de couple de direction qui s'étend de l'ensemble guidon (20) à la roue avant (4).
